(19) **Europäisches Patentamt**
**European Patent Office**
**Office européen des brevets**

(11) **EP 4 460 677 B1**

(12) **EUROPÄISCHE PATENTSCHRIFT**

(45) Veröffentlichungstag und Bekanntmachung des Hinweises auf die Patenterteilung:
**01.07.2026   Patentblatt 2026/27**

(21) Anmeldenummer: **22839781.6**

(22) Anmeldetag: **19.12.2022**

(51) Internationale Patentklassifikation (IPC):
**G01D 3/02** *(2006.01)*       **G01D 5/244** *(2006.01)*

(52) Gemeinsame Patentklassifikation (CPC):
**G01D 3/02; G01D 5/2448**

(86) Internationale Anmeldenummer:
**PCT/EP2022/086532**

(87) Internationale Veröffentlichungsnummer:
**WO 2023/131501 (13.07.2023 Gazette 2023/28)**

(54) **WINKELSENSORANORDNUNG UND VERFAHREN ZUR WINKELBESTIMMUNG**

ANGLE SENSOR ARRANGEMENT, AND ANGLE DETERMINATION METHOD

SYSTÈME DE CAPTEUR D'ANGLE ET PROCÉDÉ DE DÉTERMINATION D'ANGLE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **05.01.2022   DE 102022200058**

(43) Veröffentlichungstag der Anmeldung:
**13.11.2024   Patentblatt 2024/46**

(73) Patentinhaber: **Robert Bosch GmbH**
**70442 Stuttgart (DE)**

(72) Erfinder:
• **KLEINKNECHT, Michael**
**74251 Lehrensteinsfeld (DE)**
• **KUNTZ, Stefan**
**74223 Flein (DE)**

(56) Entgegenhaltungen:
**DE-B3- 102020 102 065     US-A1- 2015 015 175**
**US-A1- 2020 408 570**

## Beschreibung

Die Erfindung betrifft eine Winkelsensoranordnung und ein korrespondierendes Verfahren zur Winkelbestimmung. Gegenstand der vorliegenden Erfindung sind auch eine Anordnung zur Bestimmung einer Winkeldifferenz sowie ein Computerprogramm und eine Vorrichtung zur Ausführung des Computerprogramms.

Aus dem Stand der Technik ist es bekannt, eine Winkellage bzw. eine Winkelstellung eines Rotors unter Verwendung von induktiven Rotorlagesensoren durch eine mathematische Transformation von zwei gemessenen Signalen zu bestimmen, welche auch als Messsignale bezeichnet werden. Hierzu stellt in der Regel ein Sinuskanal ein entsprechendes Sinussignal der Winkellage des Rotors zur Verfügung und ein Cosinuskanal stellt ein entsprechendes Cosinussignal der Winkellage des Rotors zur Verfügung. Aus dem Sinussignal und dem Cosinussignal kann dann mittels einer Arcustangensfunktion die aktuelle Winkellage des Rotors berechnet werden. Durch Abweichungen im Layout des Sinuskanals und im Cosinuskanals, im Messprinzip, etc. sind die gemessenen Rohsignale fehlerbehaftet. Insbesondere existiert ein Offset auf den Signalen, welcher beispielsweise durch eine metallisch leitfähige Umgebung und die Leiterbahnen auf der Leiterplatte verursacht werden. Diese Abweichungen verursachen einen Fehler des gemessenen Winkels im Vergleich zum tatsächlichen Rotationswinkel. Aus dem Stand der Technik sind geeignete Korrekturmethoden bekannt, mit welchen der Fehler durch Transformation der Eingangssignale vor der Winkelberechnung verringert werden kann.

Aus der EP 1 315 954 B1 ist ein Verfahren zur Bestimmung einer Winkeldifferenz an einer geteilten Welle mit Phasenspuren und einem zwischengeschalteten Torsionsstab bekannt, wobei mittels zugeordneter Sensoren und einer Auswerteeinheit in Bezug auf eine Umdrehung der Welle jeweils mehrdeutige Phasensignale gewonnen werden. Hierbei werden wenigstens zwei Phasensignale zu einem Signal gewichtet aufsummiert. Von diesem Signal wird ein nicht ganzzahliger Anteil gebildet, welcher proportional der Winkeldifferenz ist. Aus der Winkeldifferenz wird durch Multiplikation mit der Federrate des zwischengeschalteten Torsionsstabes das an der Welle angreifende Drehmoment bestimmt. US 2020/408570 A1 zeigt eine weitere bekannte Winkelsensoranordnung mit einer Vorrichtung zur Signalaufbereitung und Offset Korrektur.

Offenbarung der Erfindung

Die Winkelsensoranordnung mit den Merkmalen des unabhängigen Patentanspruchs 1 sowie das Verfahren zur Winkelbestimmung mit den Merkmalen des unabhängigen Patentanspruchs 14 haben jeweils den Vorteil, dass eine adaptive Berechnung von Korrekturkoeffizienten auf Basis eines aktuell eingestellten Verstärkungsfaktors erfolgt. Durch geeignete Methoden werden die Korrekturkoeffizienten zur Korrektur der Messsignale an den aktuellen Verstärkungsfaktor angepasst. Hierdurch kann eine dem aktuellen Verstärkungsfaktor angepasste Korrektur der gemessenen Signale erreicht werden, die den Winkelfehler minimieren kann.

Ausführungsformen der vorliegenden Erfindung stellen eine Winkelsensoranordnung mit einem Messwertgeber, einer Messwerterfassungsvorrichtung, einer Signalaufbereitungsvorrichtung, einer Korrekturvorrichtung und einer Winkelberechnungsvorrichtung zur Verfügung. Die Messwerterfassungsvorrichtung ist ausgeführt, mindestens eine eine aktuelle Winkellage des Messwertgebers repräsentierende physikalische Größe zu erfassen und mindestens zwei Messsignale auszugeben, welche jeweils eine aktuelle Winkellage des Messwertgebers repräsentieren. Die Signalaufbereitungsvorrichtung ist ausgeführt, die mindestens zwei Messsignale aufzubereiten und jeweils mit einem variabel einstellbaren Verstärkungsfaktor zu verstärken und bei Bedarf zu digitalisieren und die aufbereiteten Messsignale sowie den aktuell eingestellten Verstärkungsfaktor der Korrekturvorrichtung zur Verfügung zu stellen. Hierbei ist die Korrekturvorrichtung ausgeführt, in Abhängigkeit des in der Signalaufbereitungsvorrichtung aktuell eingestellten Verstärkungsfaktors mindestens einen Korrekturkoeffizienten adaptiv zu berechnen und die mindestens zwei aufbereiteten Messsignale entsprechend zu korrigieren und die mindestens zwei korrigierten Messsignale auszugeben. Die Winkelberechnungsvorrichtung ist ausgeführt, mittels mindestens einer mathematischen Transformation der mindestens zwei korrigierten Messsignale die aktuelle Winkellage des Messwertgebers zu berechnen.

Zudem wird eine Anordnung zur Bestimmung einer Winkeldifferenz vorgeschlagen, welche zwei solche Winkelsensoranordnungen und eine Berechnungseinheit umfasst. Hierbei stellt eine erste solche Winkelsensoranordnung eine erste aktuelle Winkellage eines ersten Messwertgebers zur Verfügung, und eine zweite Winkelsensoranordnung stellt eine zweite aktuelle Winkellage eines zweiten Messwertgebers zur Verfügung. Die Berechnungseinheit ist ausgeführt, aus der ersten aktuellen Winkellage und aus der zweiten aktuellen Winkellage einen Differenzwinkel zu berechnen und auszugeben.

Des Weiteren wird ein Verfahren zur Winkelbestimmung eines Messwertgebers unter Verwendung einer solchen Winkelsensoranordnung vorgeschlagen. Hierbei werden mindestens zwei verschiedene Messsignale zur Verfügung gestellt, welche jeweils eine aktuelle Winkellage des Messwertgebers repräsentieren. Die mindestens zwei Messsignale werden aufbereitet, indem die mindestens zwei Messsignale jeweils mit einem variabel einstellbaren Verstärkungsfaktor verstärkt und bei Bedarf digitalisiert werden. In Abhängigkeit des aktuell eingestellten Verstärkungsfaktors wird mindestes ein Korrekturkoeffizient adaptiv berechnet und die mindestens zwei aufbereiteten Messsignale werden entsprechend korrigiert. Mittels mindestens einer mathematischen Transformation der mindestens zwei korrigierten Messsignale wird die aktuelle Winkellage des Messwertgebers berechnet und ausgegeben.

Der Messwertgeber kann beispielsweise als Rotor ausgeführt sein, dessen aktuelle Winkellage ermittelt werden soll. Alternativ kann der Messwertgeber als Linearweggeber ausgeführt sein, dessen Translationsbewegung ebenfalls mittels einer erfassten aktuellen Winkellage ausgewertet werden soll, wobei eine erfasste aktuelle Winkellage proportional zum zurückgelegten Weg des Linearweggebers ist.

Unter der Messwerterfassungsvorrichtung kann nachfolgend eine Vorrichtung verstanden werden, welche mindestens ein Sensorelement zur Erfassung der die aktuelle Winkellage des Messwertgebers repräsentierende physikalische Größe umfasst. Hierbei kann die Messwerterfassungsvorrichtung ausgeführt sein, die von dem mindestens einen Sensorelement erfasste physikalische aufzubereiten und weiterzuverarbeiten, so dass beispielsweise aus der erfassten physikalischen Größe mehrere Messsignale erzeugt und ausgegeben werden können. Das bedeutet, dass bei dieser Ausführungsform eine Anzahl "n" von ausgegebenen Messsignalen auf einer Anzahl "m" von Sensorelementen basieren, welche die physikalischen Größen erfassten, wobei die Anzahl "m" der Sensorelemente kleiner als die Anzahl "n" der ausgegebenen Messsignale ist. Selbstverständlich können die ausgegebenen Messsignale auch jeweils aus einer separat erfassten physikalischen Größe erzeugt werden. Das bedeutet, dass bei dieser Ausführungsform die Anzahl "n" von ausgegebenen Messsignalen der Anzahl "n" der Sensorelemente entspricht, welche die physikalischen Größen erfassen. Die mindestens zwei ausgegebenen Messsignale weisen eine bestimmte Phasenbeziehung zueinander auf, wobei aus den untereinander verschobenen und mehrdeutigen Messsignalen ein eindeutiger Winkelwert gewonnen werden kann. Die mindestens ausgegebenen Messsignale können beispielsweise unter Einsatz von RADAR, Laser, optischen, magnetischen, induktive oder sonstigen Sensorprinzipien gewonnen werden.

Unter der Signalaufbereitungsvorrichtung kann vorliegend eine elektrische bzw. elektronische Baugruppe verstanden werden, welche die mindestens zwei ausgegebenen Messsignale von der Messwerterfassungsvorrichtung empfängt und aufbereitet. Hierzu kann die Signalaufbereitungsvorrichtung mindestens eine analoge oder digitale Schnittstelle zum Empfangen der Messsignale aufweisen. Zur Aufbereitung der mindestens zwei Messsignale kann die Signalaufbereitungsvorrichtung mindestens einen analogen oder digitalen Verstärker und eine korrespondierende automatische Verstärkungsregelung und bei Bedarf mindestens einen Analog-Digital-Wandler umfassen. Umfasst die Signalaufbereitungsvorrichtung mindestens eine analoge Schnittstelle und mindestens einen digitalen Verstärker, dann kann der mindestens eine Analog-Digital-Wandler zwischen der analogen Schnittstelle und dem digitalen Verstärker angeordnet sein. Umfasst die Signalaufbereitungsvorrichtung mindestens eine analoge Schnittstelle und mindestens einen analogen Verstärker, dann kann die analoge Schnittstelle direkt mit dem analogen Verstärker verbunden sein und der mindestens eine Analog-Digital-Wandler kann alternativ zwischen dem mindestens einen analogen Verstärker und einem Ausgang der Signalaufbereitungsvorrichtung angeordnet sein. Stellt die Messwerterfassungsvorrichtung die Messsignale in digitaler Form, beispielsweise über ein Datenbussystem zur Verfügung, dann kann die Signalaufbereitungsvorrichtung mindestens eine digitale Schnittstelle und einen digitalen Verstärker umfassen. Der mindestens eine Analog-Digital-Wandler angeordnet ist bei dieser Ausführungsform Teil der Messwerterfassungsvorrichtung.

Unter der Korrekturvorrichtung kann vorliegend eine elektrische bzw. elektronische Baugruppe verstanden werden, welche die mindestens zwei aufbereiteten Messsignale von der Signalaufbereitungsvorrichtung empfängt und korrigiert. Hierzu kann die Korrekturvorrichtung mindestens eine digitale Schnittstelle zum Empfangen der aufbereiteten Messsignale aufweisen. Zur Korrektur der mindestens zwei Messsignale kann die Korrekturvorrichtung mindestens einen Berechnungsblock und mindestens einen korrespondierenden Korrekturblock umfassen.

Unter der Winkelberechnungsvorrichtung kann vorliegend eine elektrische bzw. elektronische Baugruppe verstanden werden, welche die mindestens zwei korrigierten Messsignale von der Korrekturvorrichtung empfängt und die aktuelle Winkellage des Messwertgebers berechnet. Hierzu kann die Winkelberechnungsvorrichtung mindestens eine digitale Schnittstelle zum Empfangen der korrigierten Messsignale aufweisen. Zur Berechnung der aktuellen Winkellage kann die Winkelberechnungsvorrichtung mindestens einen Berechnungsblock umfassen.

Die mindestens eine digitale Schnittstelle und/oder der mindestens eine digitale Verstärker der Signalaufbereitungsvorrichtung und/oder die mindestens eine digitale Schnittstelle und/oder der mindestens eine Berechnungsblock und/oder der mindestens eine Korrekturblock der Korrekturvorrichtung und/oder die mindestens eine digitale Schnittstelle und/oder der mindestens eine Berechnungsblock der Winkelberechnungsvorrichtung können hard- und/oder softwaremäßig ausgebildet sein. Bei einer hardwaremäßigen Ausbildung kann diese digitalen Komponenten der Signalaufbereitungsvorrichtung und/oder der Korrekturvorrichtung und/oder der Winkelberechnungsvorrichtung beispielsweise Teil eines sogenannten System-ASICs sein, der verschiedenste Funktionen der Signalaufbereitungsvorrichtung und/oder der Korrekturvorrichtung und/oder der Winkelberechnungsvorrichtung beinhaltet. Es ist jedoch auch möglich, dass die digitalen Komponenten eigene, integrierte Schaltkreise sind oder zumindest teilweise aus diskreten Bauelementen bestehen. Bei einer softwaremäßigen Ausbildung können die digitalen Komponenten Softwaremodule sein, die beispielsweise auf einem Mikrocontroller neben anderen Softwaremodulen vorhanden sind. Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert ist und zur Durchführung der Aufbereitung der mindestens zwei Messsignale und/oder der Korrektur der mindestens zwei aufbereiteten Messsignals und/oder zur Berechnung der aktuellen Winkellage basieren auf den mindestens zwei aufbereiteten Messsignalen verwendet wird, wenn das Programm von einer entsprechenden Vorrichtung, wie beispielsweise der Signalaufbereitungsvorrichtung und/oder der Korrekturvorrichtung und/oder der Winkelberechnungsvorrichtung ausgeführt wird.

Durch die in den abhängigen Ansprüchen aufgeführten Maßnahmen und Weiterbildungen sind vorteilhafte Verbesserungen der im unabhängigen Patentanspruch 1 angegebenen Winkelsensoranordnung und des im unabhängigen Patentanspruch 14

angegebenen Verfahrens zur Winkelbestimmung eines Messwertgebers möglich.

Besonders vorteilhaft ist, dass die Korrekturvorrichtung weiter ausgeführt sein kann, mit dem mindestens einen Korrekturkoeffizienten eine Offsetkorrektur und/oder eine Verstärkungsfaktorkorrektur und/oder eine Phasenkorrektur und/oder eine harmonische Korrektur der aufbereiteten Messsignale durchzuführen. Bei einem besonders einfachen und kostengünstigen Ausführungsbeispiel der Winkelsensoranordnung führt die Korrekturvorrichtung nur eine Offsetkorrektur der mindestens zwei aufbereiteten Messsignale aus. Selbstverständlich können durch die Korrekturvorrichtung auch noch andere nicht genannte geeignete Korrekturen der mindestens zwei aufbereiteten Messsignale durchgeführt werden. Zudem können die durchzuführenden Korrekturen beliebig kombiniert werden. So kann die Korrekturvorrichtung beispielsweise die Verstärkungsfaktorkorrektur mit der Offsetkorrektur der mindestens zwei aufbereiteten Messsignale kombinieren.

In vorteilhafter Ausgestaltung der Winkelsensoranordnung kann eine "n"-kanalige Messwerterfassungsvorrichtung "n" Messsignale einer aktuellen Winkellage des Messwertgebers zur Verfügung stellen, welche die Signalaufbereitungsvorrichtung aufbereiten und die Korrekturvorrichtung korrigieren kann. Hierbei kann die Korrekturvorrichtung "n" korrigierte Messsignale an eine Transformationsvorrichtung ausgeben, welche ausgeführt sein kann, die "n" korrigierten Messsignale mittels mindestens einer mathematischen Transformation in ein korrigiertes Sinussignal und in ein korrigiertes Cosinussignal zu transformieren und auszugeben, wobei die Winkelberechnungsvorrichtung ausgeführt sein kann, aus dem korrigierten Sinussignal und dem korrigierten Cosinussignal mittels einer Arcustangensfunktion die aktuelle Winkellage des Messwertgebers zu berechnen.

Bei dieser Ausführungsform werden die "n" Messsignale zuerst aufbereitet und korrigiert und dann in zwei korrigierte Messsignale transformiert. Alternativ kann eine "n"-kanalige Messwerterfassungsvorrichtung "n" Messsignale einer aktuellen Winkellage des Messwertgebers zur Verfügung stellen, welche die Signalaufbereitungsvorrichtung aufbereitet. Hierbei kann die Signalaufbereitungsvorrichtung "n" aufbereitete Messsignale an eine Transformationsvorrichtung ausgeben, welche ausgeführt sein kann, die "n" aufbereiteten Messsignale mittels mindestens einer mathematischen Transformation in ein aufbereitetes Sinussignal und in ein aufbereitetes Cosinussignal zu transformieren und an die Korrekturvorrichtung auszugeben, wobei die Korrekturvorrichtung ausgeführt sein kann, das aufbereitete Sinussignal und das aufbereitete Cosinussignal zu korrigieren und ein korrigiertes Sinussignal und ein korrigiertes Cosinussignal an die Winkelberechnungsvorrichtung auszugeben, welche ausgeführt sein kann, mittels einer Arcustangensfunktion aus dem korrigierten Sinuswert und dem korrigierten Cosinuswert die aktuelle Winkellage des Messwertgebers zu berechnen. Bei dieser Ausführungsform werden die "n" Messsignale zuerst aufbereitet und dann in zwei aufbereitete Messsignale transformiert, welche dann korrigiert werden.

Bei einer bevorzugten Ausgestaltung der Winkelsensoranordnung kann eine zweikanalige Messwerterfassungsvorrichtung ein Sinussignal als erstes Messsignal und ein Cosinussignal als zweites Messsignal einer aktuellen Winkellage des Messwertgebers zur Verfügung stellen, welche die Signalaufbereitungsvorrichtung aufbereitet. Hierbei kann die Signalaufbereitungsvorrichtung ein aufbereitetes Sinussignal als erstes aufbereitetes Messsignal und ein aufbereitetes Cosinussignal als zweites aufbereitetes Messsignal einer aktuellen Winkellage des Messwertgebers an die Korrekturvorrichtung ausgeben. Die Korrekturvorrichtung kann ein korrigiertes Sinussignal als erstes korrigiertes Messsignal und ein korrigiertes Cosinussignal als zweites korrigiertes Messsignal an die Winkelberechnungsvorrichtung ausgeben, welche ausgeführt sein kann, mittels einer Arcustangensfunktion aus dem korrigierten Sinuswert und dem korrigierten Cosinuswert die aktuelle Winkellage des Messwertgebers zu berechnen. Bei der bevorzugten Ausgestaltung werden nur zwei Messsignale mit einer vorgegebenen Phasenverschiebung von 90° zur Verfügung gestellt, aufbereitet und korrigiert.

In weiterer vorteilhafter Ausgestaltung der Winkelsensoranordnung können die Signalaufbereitungsvorrichtung und die Korrekturvorrichtung jeweils einkanalig ausgeführt sein. Hierbei kann ein n-kanaliger Multiplexer zwischen der Messwerterfassungsvorrichtung und der Signalaufbereitungsvorrichtung eingeschleift sein und die "n" Messsignale einer aktuellen Winkellage des Messwertgebers der Signalaufbereitungsvorrichtung nacheinander zur Verfügung stellen, welche die "n" Messsignale nacheinander aufbereitet und ausgibt. Die einkanalige Korrekturvorrichtung kann die "n" aufbereiteten Messsignale von der einkanaligen Signalaufbereitungsvorrichtung nacheinander korrigieren und ausgeben, wobei ein n-kanaliger Demultiplexer die "n" korrigierten Messsignale nacheinander empfangen und speichern und gleichzeitig an die Winkelberechnungsvorrichtung ausgeben kann. Bei dieser Ausgestaltung sind sowohl die Signalaufbereitungsvorrichtung als auch die Korrekturvorrichtung einkanalig ausgeführt, so dass der Multiplexer vor der Signalaufbereitungsvorrichtung und der Demultiplexer nach der Korrekturvorrichtung angeordnet werden. Alternativ kann die Signalaufbereitungsvorrichtung einkanalig und die Korrekturvorrichtung kann mehrkanalig ausgeführt sein, wobei zwischen der einkanaligen Signalaufbereitungsvorrichtung und der mehrkanaligen Korrekturvorrichtung ein n-kanaliger Demultiplexer eingeschleift sein kann, welcher die "n" aufbereiteten Messsignale nacheinander empfangen und speichern und gleichzeitig an die mehrkanalige Korrekturvorrichtung ausgeben kann. Bei dieser Ausgestaltung ist nur die Signalaufbereitungsvorrichtung einkanalig ausgeführt, so dass der Multiplexer vor der Signalaufbereitungsvorrichtung und der Demultiplexer nach der Signalaufbereitungsvorrichtung angeordnet werden können. Bei einer weiteren alternativen Ausgestaltung der Winkelsensoranordnung kann die Signalaufbereitungsvorrichtung mehrkanalig und die Korrekturvorrichtung kann einkanalig ausgeführt sein. Hierbei kann ein n-kanaliger Multiplexer zwischen der mehrkanaligen Signalaufbereitungsvorrichtung und der einkanaligen Korrekturvorrichtung eingeschleift sein und die "n" angepassten Messsignale einer aktuellen Winkellage des Messwertgebers der Korrekturvorrichtung nacheinander zur Verfügung stellen, welche die "n" aufbereiteten Messsignale nacheinander empfängt, korrigiert und ausgibt. Ein n-kanaliger Demultiplexer kann bei dieser alternativen Ausgestaltung zwischen der Korrekturvorrichtung und der Winkelberechnungsvorrichtung angeschleift werden und die "n" korrigierten Messsignale nacheinander empfangen und speichern und gleichzeitig an die Winkelberechnungsvorrichtung ausgeben. Der Multiplexer und der Demultiplexer können auch bei der zweikanaligen Ausführung der Messwerterfassungsvorrichtung eingesetzt werden, um eine einkanalige Signalaufbereitung und/oder eine einkanalige Korrektur der zwei ausgegebenen Messsignale zu ermöglichen.

In weiterer vorteilhafter Ausgestaltung der Winkelsensoranordnung kann die Korrekturvorrichtung weiter ausgeführt sein, den mindestens einen Korrekturkoeffizienten über einen linearen mathematischen Zusammenhang oder über eine vorab erstellte und gespeicherte Umsetztabelle an den aktuell eingestellten Verstärkungsfaktor anzupassen. Dies ermöglicht eine einfache und kostengünstige Implementierung der Korrekturvorrichtung.

In weiterer vorteilhafter Ausgestaltung der Winkelsensoranordnung kann die Korrekturvorrichtung beispielsweise für jeden Messkanal mindestens einen Berechnungsblock und mindestens einen Korrekturblock umfassen. Hierbei kann der mindestens eine Berechnungsblock ausgeführt sein, den mindestens einen Korrekturkoeffizienten für die aufbereiteten mindestens zwei Messsignale in Abhängigkeit des aktuell eingestellten Verstärkungsfaktor adaptiv zu berechnen und dem korrespondierenden Korrekturblock zur Verfügung zu stellen, welcher die aufbereiteten Messsignale entsprechend korrigiert und die korrigierten Messsignale ausgibt. Bei einer bevorzugten Ausgestaltung wird für die Messkanäle ein gemeinsamer Berechnungsblock verwendet.

In weiterer vorteilhafter Ausgestaltung der Winkelsensoranordnung können die Signalaufbereitungsvorrichtung und/oder die Korrekturvorrichtung und/oder die Winkelberechnungsvorrichtung beispielsweise jeweils als anwendungsspezifischer integrierter Schaltkreis oder als programmierbare Logikgatteranordnung oder als Mikrocontroller ausgeführt sein.

Ausführungsbeispiele der Erfindung sind in den Zeichnungen dargestellt und werden in der nachfolgenden Beschreibung näher erläutert. In den Zeichnungen bezeichnen gleiche Bezugszeichen Komponenten bzw. Elemente, die gleiche bzw. analoge Funktionen ausführen.

Kurze Beschreibung der Zeichnungen

Fig. 1 zeigt ein schematisches Blockdiagramm eines ersten Ausführungsbeispiels einer erfindungsgemäßen Messwerterfassungsvorrichtung.

Fig. 2 zeigt ein schematisches Blockdiagramm eines zweiten Ausführungsbeispiels einer erfindungsgemäßen Messwerterfassungsvorrichtung.

Fig. 3 zeigt ein schematisches Blockdiagramm eines dritten Ausführungsbeispiels einer erfindungsgemäßen Messwerterfassungsvorrichtung.

Fig. 4 zeigt ein schematisches Blockdiagramm eines vierten Ausführungsbeispiels einer erfindungsgemäßen Messwerterfassungsvorrichtung.

Fig. 5 zeigt ein schematisches Blockdiagramm eines sechsten Ausführungsbeispiels einer erfindungsgemäßen Messwerterfassungsvorrichtung.

Fig. 6 zeigt ein schematisches Blockdiagramm eines Ausführungsbeispiels einer erfindungsgemäßen Anordnung zur Bestimmung einer Winkeldifferenz.

Fig. 7 zeigt eine schematisches Ablaufdiagramme eines Ausführungsbeispiels eines erfindungsgemäßen Verfahrens zur Winkelbestimmung eines Messwertgebers unter Verwendung der Messwerterfassungsvorrichtung aus Fig. 1 bis 5.

Ausführungsformen der Erfindung

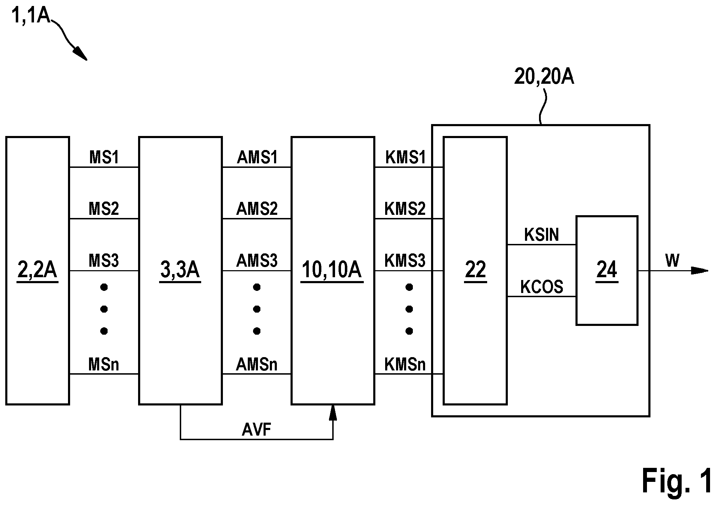

Wie aus Fig. 1 bis 5 ersichtlich ist, umfassen die dargestellten Ausführungsbeispiele einer erfindungsgemäßen Winkelsensoranordnung 1, 1A, 1B, 1C, 1D, 1E jeweils einen nicht näher dargestellten Messwertgeber, eine Messwerterfassungsvorrichtung 2, eine Signalaufbereitungsvorrichtung 3, eine Korrekturvorrichtung 10 und eine Winkelberechnungsvorrichtung 20, 20A, 20B. Die Messwerterfassungsvorrichtung 2 erfasst mindestens eine eine aktuelle Winkellage W des Messwertgebers repräsentierende physikalische Größe und gibt mindestens zwei Messsignale MS1, MS2, MS3, MSn aus, welche jeweils eine aktuelle Winkellage W des Messwertgebers repräsentieren. Die Signalaufbereitungsvorrichtung 3 bereitet die mindestens zwei Messsignale MS1, MS2, MS3, MSn auf und verstärkt und die mindestens zwei Messsignale MS1, MS2, MS3, MSn jeweils mit einem variabel einstellbaren Verstärkungsfaktor. Bei Bedarf digitalisiert die Signalaufbereitungsvorrichtung 3 die mindestens zwei Messsignale MS1, MS2, MS3, MSn und stellt die aufbereiteten Messsignale AMS1, AMS2, AMS3, AMSn der Korrekturvorrichtung 10 zur Verfügung. Hierbei berechnet die Korrekturvorrichtung 10 in Abhängigkeit des in der Signalaufbereitungsvorrichtung 3 aktuell eingestellten Verstärkungsfaktors AVF mindestens einen Korrekturkoeffizienten KK1, KK2, KK3, KK4 adaptiv und korrigiert die mindestens zwei aufbereiteten Messsignale AMS1, AMS2, AMS3, AMSn entsprechend und gibt die mindestens zwei korrigierten Messsignale KMS1, KMS2, KMS3, KMSn aus. Die Winkelberechnungsvorrichtung 20, 20A, 20B berechnet mittels mindestens einer mathematischen Transformation der mindestens zwei korrigierten Messsignale KMS1, KMS2, KMS3, KMSn die aktuelle Winkellage W des Messwertgebers.

Wie aus Fig. 1 bis 4 weiter ersichtlich ist, umfassen die vier dargestellten Ausführungsbeispiele der Winkelsensoranordnung 1A, 1B, 1C, 1D jeweils eine "n"-kanalige Messwerterfassungsvorrichtung 2A, welche "n" Messsignale MS1, MS2, MS3, MSn einer aktuellen Winkellage W des Messwertgebers zur Verfügung stellt. Die "n" ausgegebenen Messsignale MS1, MS2, MS3, MSn weisen eine bestimmte Phasenbeziehung zueinander auf, wobei aus den untereinander verschobenen und mehrdeutigen Messsignalen MS1, MS2, MS3, MSn ein eindeutiger Winkelwert W gewonnen werden kann. In den dargestellten Ausführungsbeispielen werden die ausgegebenen Messsignale MS1, MS2, MS3, MSn unter Einsatz eines induktiven Sensorprinzips gewonnen. Bei nicht dargestellten Ausführungsbeispielen der Winkelsensoranordnung 1 können andere Sensorprinzipen, wie beispielsweise RADAR, Laser, optische, magnetische oder sonstigen Sensorprinzipien eingesetzt werden, um die mindestens zwei Messsignale MS1, MS2, MS3, MSn zu gewinnen. Die "n" Messsignale MS1, MS2, MS3, MSn werden von der Signalaufbereitungsvorrichtung 3 aufbereitet und von der Korrekturvorrichtung 10 korrigiert.

Wie aus Fig. 1 weiter ersichtlich ist, umfasst das dargestellte erste Ausführungsbeispiel der Winkelsensoranordnung 1A zusätzlich zu der "n"-kanaligen Messwerterfassungsvorrichtung 2A eine n-kanalige Signalaufbereitungsvorrichtung 3A und eine n-kanalige Korrekturvorrichtung 10A. Die n-kanalige Signalaufbereitungsvorrichtung 3A empfängt die "n" Messsignale MS1, MS2, MS3, MSn von der "n"-kanaligen Messwerterfassungsvorrichtung 2A bereitet diese auf und gibt die "n" aufbereiteten Messsignale AMS1, AMS2, AMS3, AMSn an die n-kanalige Korrekturvorrichtung 10A aus. Die n-kanalige Korrekturvorrichtung 10A korrigiert die "n" aufbereiteten Messsignale AMS1, AMS2, AMS3, AMSn und gibt die "n" korrigierten Messsignale KMS1, KMS2, KMS3, KMSn an eine Transformationsvorrichtung 22 aus. Die Transformationsvorrichtung 22 ist im dargestellten ersten Ausführungsbeispiel der Winkelsensoranordnung 1A Teil der Winkelberechnungsvorrichtung 20A. Die Transformationsvorrichtung 22 transformiert die "n" korrigierten Messsignale KMS1, KMS2, KMS3, KMSn mittels mindestens einer mathematischen Transformation in ein korrigiertes Sinussignal KSIN und in ein korrigiertes Cosinussignal KCOS und gibt das korrigierte Sinussignal KSIN und das korrigierte Cosinussignal KCOS an einen Berechnungsblock 24 der Winkelberechnungsvorrichtung 20A aus. Bei einer dreikanaligen Ausführung der Korrekturvorrichtung 10 empfängt die Transformationsvorrichtung 22 beispielsweise drei korrigierte Messsignale KMS1, KMS2, KMS3, welche jeweils eine Phasenverschiebung von 120° zueinander aufweisen. Diese drei korrigierten Messsignale KMS1, KMS2, KMS3 transformiert die Transformationsvorrichtung 22 mittels einer Clarke-Transformation in das korrigierte Sinussignal KSIN und in das korrigierte Cosinussignal KCOS. Das korrigierte Sinussignal KSIN und das korrigierte Cosinussignal KCOS weisen eine Phasenverschiebung von 90° zueinander auf. Der Berechnungsblock 24 der Winkelberechnungsvorrichtung 20A berechnet aus dem korrigierten Sinussignal KSIN und dem korrigierten Cosinussignal KCOS mittels einer Arcustangensfunktion die aktuelle Winkellage W des Messwertgebers.

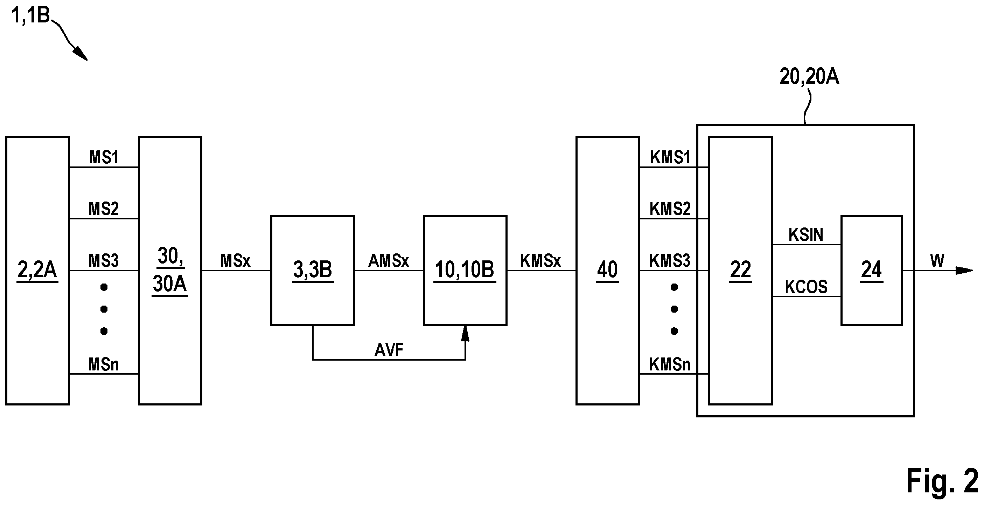

Wie aus Fig. 2 weiter ersichtlich ist, umfasst das dargestellte zweite Ausführungsbeispiel der Winkelsensoranordnung 1B zusätzlich zu der "n"-kanaligen Messwerterfassungsvorrichtung 2A eine einkanalige Signalaufbereitungsvorrichtung 3B und eine einkanalige Korrekturvorrichtung 10B. Hierbei ist zwischen der "n"-kanaligen Messwerterfassungsvorrichtung 2A und der einkanaligen Signalaufbereitungsvorrichtung 3B ein n-kanalige Multiplexer 30 angeordnet, welcher im dargestellten Ausführungsbeispiel als analoger n-kanalige Multiplexer 30A ausgeführt ist. Der n-kanalige Multiplexer 30 empfängt die "n" Messsignale MS1, MS2, MS3, MSn parallel von der "n"-kanaligen Messwerterfassungsvorrichtung 2A und stellt diese in einer vorgegebenen Reihenfolge als Ausgangssignal MSx der einkanaligen Signalaufbereitungsvorrichtung 3B nacheinander zur Verfügung. Die einkanalige Signalaufbereitungsvorrichtung 3B bereitet die zur Verfügung gestellten "n" Messsignale MS1, MS2, MS3, MSn auf und gibt die "n" aufbereiteten Messsignale AMS1, AMS2, AMS3, AMSn nacheinander als Ausgangssignal AMSx an die einkanalige Korrekturvorrichtung 10B aus. Die einkanalige Korrekturvorrichtung 10B korrigiert die "n" aufbereiteten Messsignale AMS1, AMS2, AMS3, AMSn und gibt die "n" korrigierten Messsignale KMS1, KMS2, KMS3, KMSn nacheinander als Ausgangssignal KMSx an einen n-kanalige Demultiplexer 40 aus, welcher die "n" korrigierten Messsignale KMS1, KMS2, KMS3, KMSn nacheinander empfängt, speichert und gleichzeitig an die Transformationsvorrichtung 22 ausgibt. Die Transformationsvorrichtung 22 ist auch im dargestellten zweiten Ausführungsbeispiel der Winkelsensoranordnung 1B Teil der Winkelberechnungsvorrichtung 20A. Die Transformationsvorrichtung 22 transformiert die "n" korrigierten Messsignale KMS1, KMS2, KMS3, KMSn analog zum ersten Ausführungsbeispiel der Winkelsensoranordnung 1A mittels mindestens einer mathematischen Transformation in ein korrigiertes Sinussignal KSIN und in ein korrigiertes Cosinussignal KCOS und gibt das korrigierte Sinussignal KSIN und das korrigierte Cosinussignal KCOS an einen Berechnungsblock 24 der Winkelberechnungsvorrichtung 20A aus. Das korrigierte Sinussignal KSIN und das korrigierte Cosinussignal KCOS weisen eine Phasenverschiebung von 90° zueinander auf. Der Berechnungsblock 24 der Winkelberechnungsvorrichtung 20A berechnet aus dem korrigierten Sinussignal KSIN und dem korrigierten Cosinussignal KCOS mittels einer Arcustangensfunktion die aktuelle Winkellage W des Messwertgebers.

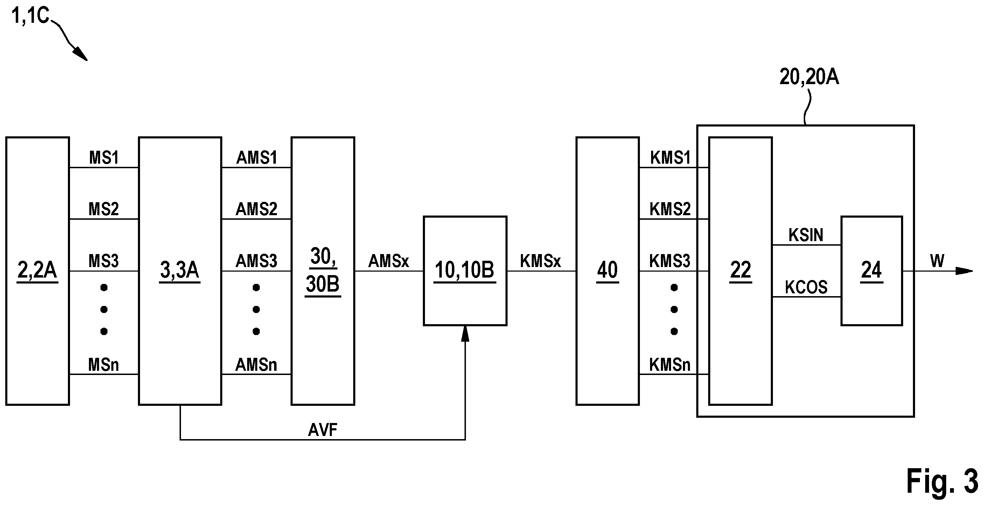

Wie aus Fig. 3 weiter ersichtlich ist, umfasst das dargestellte dritte Ausführungsbeispiel der Winkelsensoranordnung 1C zusätzlich zu der "n"-kanaligen Messwerterfassungsvorrichtung 2A eine n-kanalige Signalaufbereitungsvorrichtung 3A und eine einkanalige Korrekturvorrichtung 10B. Hierbei ist zwischen der n-kanaligen Signalaufbereitungsvorrichtung 3A und der einkanaligen Korrekturvorrichtung 10B ein n-kanalige Multiplexer 30 angeordnet, welcher im dargestellten Ausführungsbeispiel als n-kanaliger digitaler Multiplexer 30A ausgeführt ist. Die n-kanalige Signalaufbereitungsvorrichtung 3A empfängt die "n" Messsignale MS1, MS2, MS3, MSn von der "n"-kanaligen Messwerterfassungsvorrichtung 2A bereitet diese auf und gibt die "n" aufbereiteten Messsignale AMS1, AMS2, AMS3, AMSn an den n-kanaligen Multiplexer 30 aus. Der n-kanalige Multiplexer 30 empfängt die "n" aufbereiteten Messsignale AMS1, AMS2, AMS3, AMSn parallel von der "n"-kanaligen Signalaufbereitungsvorrichtung 3A und stellt diese in einer vorgegebenen Reihenfolge als Ausgangssignal AMSx der einkanaligen Korrekturvorrichtung 10B nacheinander zur Verfügung. Die einkanalige Korrekturvorrichtung 10B korrigiert die "n" aufbereiteten Messsignale AMS1, AMS2, AMS3, AMSn und gibt die "n" korrigierten Messsignale KMS1, KMS2, KMS3, KMSn nacheinander als Ausgangssignal KMSx an einen n-kanalige Demultiplexer 40 aus, welcher die "n" korrigierten Messsignale KMS1, KMS2, KMS3, KMSn nacheinander empfängt, speichert und gleichzeitig an die Transformationsvorrichtung 22 ausgibt. Die Transformationsvorrichtung 22 ist auch im dargestellten dritten Ausführungsbeispiel der Winkelsensoranordnung 1B Teil der Winkelberechnungsvorrichtung 20A. Die Transformationsvorrichtung 22 transformiert die "n" korrigierten Messsignale KMS1, KMS2, KMS3, KMSn analog zum ersten und zweiten Ausführungsbeispiel der Winkelsensoranordnung 1A, 1B mittels mindestens einer mathematischen Transformation in ein korrigiertes Sinussignal KSIN und in ein korrigiertes Cosinussignal KCOS und gibt das korrigierte Sinussignal KSIN und das korrigierte Cosinussignal KCOS an einen Berechnungsblock 24 der Winkelberechnungsvorrichtung 20A aus. Das korrigierte Sinussignal KSIN und das korrigierte Cosinussignal KCOS weisen eine Phasenverschiebung von 90° zueinander auf. Der Berechnungsblock 24 der Winkelberechnungsvorrichtung 20A berechnet aus dem korrigierten Sinussignal KSIN und dem korrigierten Cosinussignal KCOS mittels einer Arcustangensfunktion die aktuelle Winkellage W des Messwertgebers.

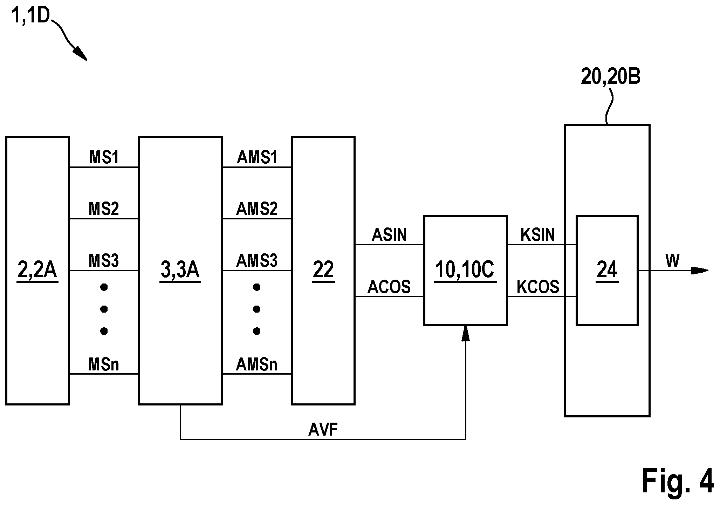

Wie aus Fig. 4 weiter ersichtlich ist, umfasst das dargestellte vierte Ausführungsbeispiel der Winkelsensoranordnung 1D zusätzlich zu der "n"-kanaligen Messwerterfassungsvorrichtung 2A eine n-kanalige Signalaufbereitungsvorrichtung 3A und eine zweikanalige Korrekturvorrichtung 10C. Hierbei ist zwischen der n-kanaligen Signalaufbereitungsvorrichtung 3A und der zweikanalige Korrekturvorrichtung 10B eine Transformationsvorrichtung 22 angeordnet. Die n-kanalige Signalaufbereitungsvorrichtung 3A empfängt die "n" Messsignale MS1, MS2, MS3, MSn von der "n"-kanaligen Messwerterfassungsvorrichtung 2A bereitet diese auf und gibt die "n" aufbereiteten Messsignale AMS1, AMS2, AMS3, AMSn an die Transformationsvorrichtung 22 aus. Die Transformationsvorrichtung 22 transformiert die "n" aufbereiteten Messsignale AMS1, AMS2, AMS3, AMSn mittels mindestens einer mathematischen Transformation in ein aufbereitetes Sinussignal ASIN und in ein aufbereitetes Cosinussignal ACOS und gibt das aufbereitete Sinussignal ASIN und das aufbereitete Cosinussignal ACOS an die zweikanalige Korrekturvorrichtung 10C aus. Die zweikanalige Korrekturvorrichtung 10C korrigiert das aufbereite Sinussignal ASIN und das aufbereitete Cosinussignal ACOS und gibt das korrigierte Sinussignal KSIN und das korrigierte Cosinussignal KCOS an einen Berechnungsblock 24 der Winkelberechnungsvorrichtung 20B aus. Das korrigierte Sinussignal KSIN und das korrigierte Cosinussignal KCOS weisen eine Phasenverschiebung von 90° zueinander auf. Der Berechnungsblock 24 der Winkelberechnungsvorrichtung 20B berechnet aus dem korrigierten Sinussignal KSIN und dem korrigierten Cosinussignal KCOS mittels einer Arcustangensfunktion die aktuelle Winkellage W des Messwertgebers.

In einem alternativen nicht dargestellten Ausführungsbeispiel der Winkelsensoranordnung 1 umfasst diese zusätzlich zu der "n"-kanaligen Messwerterfassungsvorrichtung 2A eine einkanalige Signalaufbereitungsvorrichtung 3B und eine n-kanalige Korrekturvorrichtung 10A. Hierbei ist zwischen der "n"-kanaligen Messwerterfassungsvorrichtung 2A und der einkanaligen Signalaufbereitungsvorrichtung 3B ein n-kanalige Multiplexer 30 angeordnet. Der n-kanalige Multiplexer 30 empfängt die "n" Messsignale MS1, MS2, MS3, MSn parallel von der "n"-kanaligen Messwerterfassungsvorrichtung 2A und stellt diese in einer vorgegebenen Reihenfolge als Ausgangssignal MSx der einkanaligen Signalaufbereitungsvorrichtung 3B nacheinander zur Verfügung. Die einkanalige Signalaufbereitungsvorrichtung 3B bereitet die zur Verfügung gestellten "n" Messsignale MS1, MS2, MS3, MSn auf und gibt die "n" aufbereiteten Messsignale AMS1, AMS2, AMS3, AMSn nacheinander als Ausgangssignal AMSx an einen n-kanaligen Demultiplexer 40 aus, welcher die "n" aufbereiteten Messsignale AMS1, AMS2, AMS3, AMSn nacheinander empfängt, speichert und gleichzeitig an die n-kanalige Korrekturvorrichtung 10A ausgibt. Die n-kanalige Korrekturvorrichtung 10A korrigiert die "n" aufbereiteten Messsignale AMS1, AMS2, AMS3, AMSn und gibt die "n" korrigierten Messsignale KMS1, KMS2, KMS3, KMSn an eine Transformationsvorrichtung 22 ausgibt. Die Transformationsvorrichtung 22 transformiert die "n" korrigierten Messsignale KMS1, KMS2, KMS3, KMSn mittels mindestens einer mathematischen Transformation in ein korrigiertes Sinussignal KSIN und in ein korrigiertes Cosinussignal KCOS und gibt das korrigierte Sinussignal KSIN und das korrigierte Cosinussignal KCOS an einen Berechnungsblock 24 der Winkelberechnungsvorrichtung 20A aus. Das korrigierte Sinussignal KSIN und das korrigierte Cosinussignal KCOS weisen eine Phasenverschiebung von 90° zueinander auf. Der Berechnungsblock 24 der Winkelberechnungsvorrichtung 20A berechnet aus dem korrigierten Sinussignal KSIN und dem korrigierten Cosinussignal KCOS mittels einer Arcustangensfunktion die aktuelle Winkellage W des Messwertgebers.

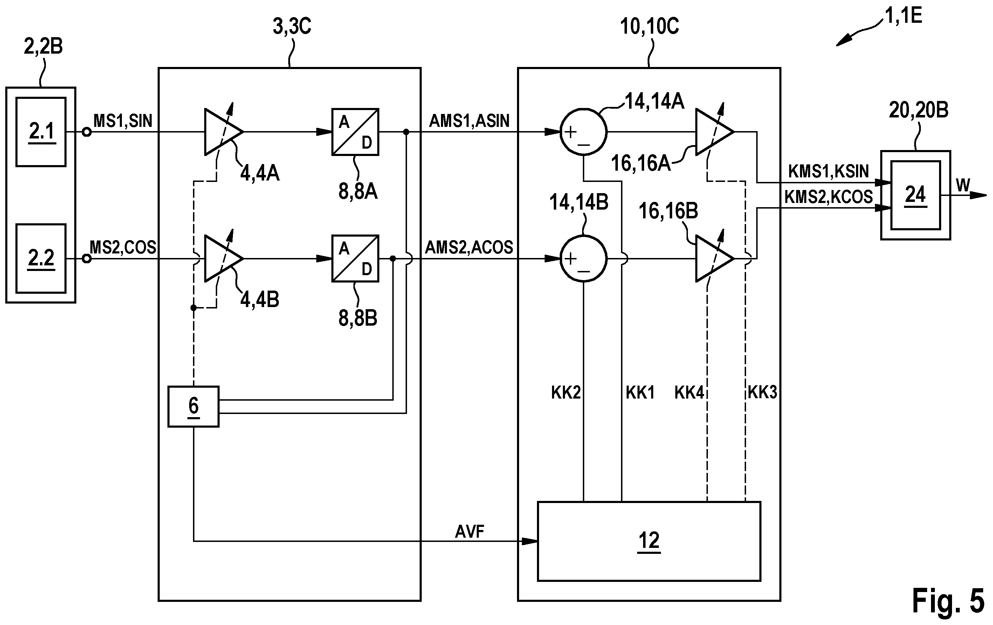

Wie aus Fig. 5 weiter ersichtlich ist, umfasst das dargestellte fünfte Ausführungsbeispiel der Winkelsensoranordnung 1E eine zweikanalige Messwerterfassungsvorrichtung 2B, eine zweikanalige Signalaufbereitungsvorrichtung 3C und eine zweikanalige Korrekturvorrichtung 10C. Die zweikanalige Messwerterfassungsvorrichtung 2B umfasst im dargestellten Ausführungsbeispiel zwei Sensorelemente 2.1, 2.2. Hierbei stellt ein erstes Sensorelement 2.1 ein Sinussignal SIN als erstes Messsignal MS1 und ein zweites Sensorelement 2.2 stellt ein Cosinussignal COS als zweites Messsignal MS2 einer aktuellen Winkellage W des Messwertgebers zur Verfügung, wobei das Cosinussignal COS um 90° gegenüber dem Sinussignal SIN verschoben ist. Die in Fig. 1 bis 4 dargestellte n-kanalige Messwerterfassungsvorrichtung 2A umfasst im Gegensatz dazu "n" nicht näher dargestellte Sensorelemente, welche jeweils eines der Messsignale MS1, MS2, MS3, MSn zur Verfügung stellen. Die zweikanalige Signalaufbereitungsvorrichtung 3C empfängt das Sinussignal SIN und das Cosinussignal COS von der zweikanaligen Messwerterfassungsvorrichtung 2B und bereitet diese auf. Wie aus Fig. 5 weiter ersichtlich ist, umfasst die zweikanalige Signalaufbereitungsvorrichtung 3C im dargestellten Ausführungsbeispiel zwei analoge Verstärker 4, eine automatische Verstärkungsregelung 6 und zwei Analog-Digital-Wandler 8. Hierbei bilden ein erster analoger Verstärker 4A und ein erster Analog-Digital-Wandler 8A einen ersten Kanal der zweikanaligen Signalaufbereitungsvorrichtung 3C aus, und ein zweiter analoger Verstärker 4B und ein zweiter Analog-Digital-Wandler 8B bilden einen zweiten Kanal der zweikanaligen Signalaufbereitungsvorrichtung 3C aus. Der erste analoge Verstärker 4A verstärkt das Sinussignal SIN und der zweite analoge Verstärker 4B verstärkt das Cosinussignal COS. Der erste Analog-Digital-Wandler 8A wandelt das verstärkte analoge Sinussignal SIN in ein digitales Sinussignal SIN um und gibt das so aufbereitete Sinussignal ASIN an die zweikanalige Korrekturvorrichtung 10C aus. Der zweite Analog-Digital-Wandler 8B wandelt das verstärkte analoge Cosinussignal COS in ein digitales Cosinussignal COS um und gibt das so aufbereitete Cosinussignal ACOS an die zweikanalige Korrekturvorrichtung 10C aus. Die automatische Verstärkungsregelung 6 regelt sowohl die Verstärkung im ersten Kanal der zweikanaligen Signalaufbereitungsvorrichtung 3C als auch die Verstärkung im zweiten Kanal der zweikanaligen Signalaufbereitungsvorrichtung 3C und gibt die eingestellten aktuellen Verstärkungsfaktoren AVF an die zweikanalige Korrekturvorrichtung 10C aus.

Die in Fig. 1, 3 und 4 dargestellte n-kanalige Signalaufbereitungsvorrichtung 3A umfasst für jeden der "n" Kanäle einen analogen Verstärker 4 und einen Analog-Digital-Wandler 8 und eine gemeinsame automatische Verstärkungsregelung 6, welche die Verstärkung in den "n" Kanälen der n-kanaligen Signalaufbereitungsvorrichtung 3A regelt. Die in Fig. 2 dargestellte einkanalige Signalaufbereitungsvorrichtung 3B umfasst einen analogen Verstärker 4 und einen Analog-Digital-Wandler 8 und eine automatische Verstärkungsregelung 6, welche die Verstärkung in dem Kanal einkanaligen Signalaufbereitungsvorrichtung 3B regelt.

Wie aus Fig. 5 weiter ersichtlich ist, umfasst die zweikanalige Korrekturvorrichtung 10C im dargestellten Ausführungsbeispiel zwei erste Korrekturblöcke 14 und zwei zweite Korrekturblöcke 16 und einen Berechnungsblock 12 umfassen. Hierbei sind die beiden ersten Korrekturblöcke 14 jeweils als Addierer 14A, 14B ausgeführt, und die beiden zweiten Korrekturblöcke 16 sind jeweils als digitaler Verstärker 16A, 16B ausgeführt. Ein erster Addierer 14A und ein erster digitaler Verstärker 16A bilden im dargestellten Ausführungsbeispiel einen ersten Kanal der zweikanaligen Korrekturvorrichtung 10C aus. Ein zweiter Addierer 14B und ein zweiter digitaler Verstärker 16B bilden im dargestellten Ausführungsbeispiel einen zweiten Kanal der zweikanaligen Korrekturvorrichtung 10C aus. Der Berechnungsblock 12 berechnet basierend auf dem aktuell eingestellten Verstärkungsfaktor AVF für das Sinussignal SIN adaptiv einen ersten Korrekturkoeffizienten KK1 und gibt diesen an den ersten Addierer 14A aus, welcher den Offset des aufbereiteten Sinussignals ASIN korrigiert. Zudem berechnet der Berechnungsblock 12 basierend auf dem aktuell eingestellten Verstärkungsfaktor AVF für das Cosinussignal COS adaptiv einen zweiten Korrekturkoeffizienten KK2 und gibt diesen an den zweiten Addierer 14B aus, welcher den Offset des aufbereiteten Cosinussignals ACOS korrigiert. Der Berechnungsblock 12 berechnet basierend auf dem aktuell eingestellten Verstärkungsfaktor AVF für das Sinussignal SIN adaptiv einen dritten Korrekturkoeffizienten KK3 und stellt mit diesem den Verstärkungsfaktor des ersten digitalen Verstärkers 16A ein, um den Verstärkungsfaktor des aufbereiteten Sinussignals ASIN zu korrigieren und das korrigierte Sinussignal KSIN an die Winkelberechnungsvorrichtung 20B auszugeben. Des Weiteren berechnet der Berechnungsblock 12 basierend auf dem aktuell eingestellten Verstärkungsfaktor AVF für das Cosinussignal COS adaptiv einen vierten Korrekturkoeffizienten KK4 und stellt mit diesem den Verstärkungsfaktor des zweiten digitalen Verstärkers 16B ein, um den Verstärkungsfaktor des aufbereiteten Cosinussignals ASOS zu korrigieren und das korrigierte Cosinussignal KCOS an die Winkelberechnungsvorrichtung 20B auszugeben. Der Berechnungsblock 12 passt die Korrekturkoeffizienten KK1, KK2, KK3, KK4 über einen linearen mathematischen Zusammenhang oder über eine vorab erstellte und gespeicherte Umsetztabelle an den aktuell eingestellten Verstärkungsfaktor AVF an. Im dargestellten Ausführungsbeispiel werden die Korrekturkoeffizienten KK1, KK2 zur Offsetkorrektur über einen linearen mathematischen Zusammenhang gemäß Gleichung (1) und (2) berechnet.

$$KK1 = a1 * AVF1 + b1 \qquad (1)$$

$$KK2 = a2 * AVF2 + b2 \qquad (2)$$

Hierbei repräsentieren a1, a2 Parameter, welche beispielsweise vorab per Simulation ermittelt werden können. Die Parameter b1, b2 repräsentieren beispielsweise einen Offset des korrespondierenden Analog-Digital-Wandlers 8A, 8B. So repräsentiert b1 den Offset des ersten Analog-Digital-Wandlers 8A und b2 repräsentiert den Offset des zweiten Analog-Digital-Wandlers 8B. AVF1 repräsentiert den aktuellen Verstärkungsfaktor des ersten analogen Verstärkers 4A und AVF2 repräsentiert den aktuellen Verstärkungsfaktor des zweiten analogen Verstärkers 4B. Die beiden Korrekturkoeffizienten KK3, KK4 zur Verstärkungsfaktorkorrektur werden über eine vorab erstellte und gespeicherte Umsetztabelle an den aktuell eingestellten Verstärkungsfaktor AVF angepasst.

Die Winkelberechnungsvorrichtung 20B umfasst im dargestellten Ausführungsbeispiel einen Berechnungsblock 24, welcher mittels einer Arcustangensfunktion aus dem korrigierten Sinuswert KSIN und dem korrigierten Cosinuswert KCOS die aktuelle Winkellage W des Messwertgebers berechnet.

Selbstverständlich kann die Korrekturvorrichtung 10 auch noch andere nicht genannte geeignete Korrekturen, wie beispielsweise eine Phasenkorrektur und/oder eine harmonische Korrektur der mindestens zwei aufbereiteten Messsignale MS1, MS2, MS3, MSn durchführen. Zudem können die durchzuführenden Korrekturen beliebig kombiniert werden. Des Weiteren kann die Korrekturvorrichtung 10 beispielsweise auch nur die Verstärkungsfaktorkorrektur oder nur die Offsetkorrektur der mindestens zwei aufbereiteten Messsignale AMS1, AMS2, AMS3, AMSn durchführen.

Die in Fig. 1 dargestellte n-kanalige Korrekturvorrichtung 10A umfasst für jeden der "n" Kanäle mindestens einen Korrekturblock 14, 16 und einen gemeinsamen Berechnungsblock 12, welcher die Korrekturkoeffizienten KK1, KK2, KK3, KK4 für den mindestens einen Korrekturblock 14, 16 adaptiv berechnet. Die in Fig. 2 und 3 dargestellte einkanalige Korrekturvorrichtung 10B umfasst mindestens einen Korrekturblock 14, 16 und einen Berechnungsblock 12, welcher die Korrekturkoeffizienten KK1, KK2, KK3, KK4 für den mindestens einen Korrekturblock 14, 16 adaptiv berechnet.

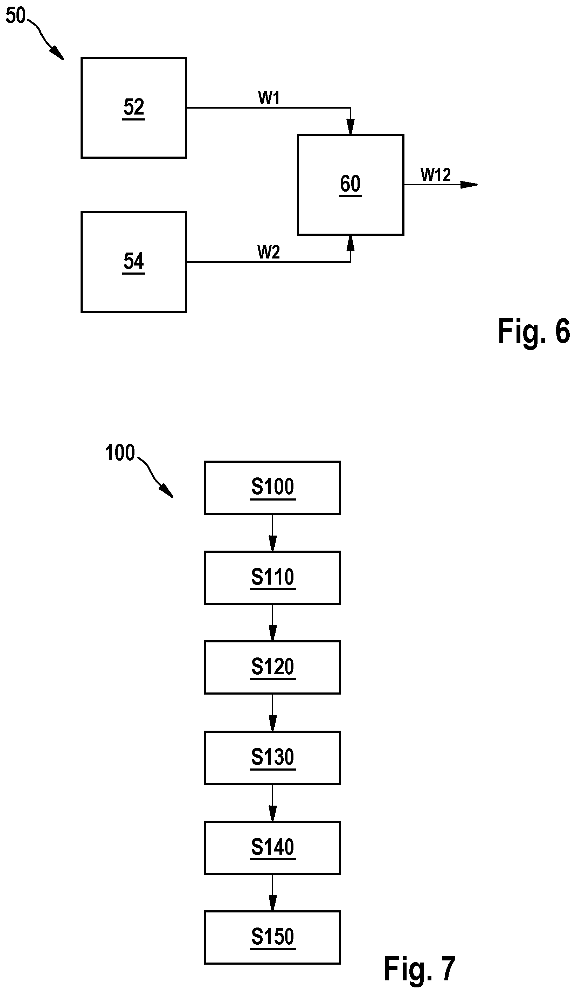

Wie aus Fig. 6 weiter ersichtlich ist, umfasst das dargestellte Ausführungsbeispiel einer erfindungsgemäßen Anordnung 50 zur Bestimmung einer Winkeldifferenz WD zwei Winkelsensoranordnungen 52, 54 und einer Berechnungseinheit 60. Der Aufbau und die Funktion der beiden Winkelsensoranordnungen 52, 54 entsprechen jeweils dem Aufbau und der Funktion von einer der oben beschriebenen Winkelsensoranordnungen 1. Hierbei stellt eine erste Winkelsensoranordnung 52 eine erste aktuelle Winkellage W1 eines ersten Messwertgebers zur Verfügung, und eine zweite Winkelsensoranordnung 54 stellt eine zweite aktuelle Winkellage W2 eines zweiten Messwertgebers zur Verfügung. Die Berechnungseinheit 60 berechnet aus der ersten aktuellen Winkellage W1 und aus der zweiten aktuellen Winkellage W2 einen Differenzwinkel und gibt diesen aus. Der Differenzwinkel kann beispielsweise zur Berechnung eines an einer Welle angreifenden Drehmoments verwendet werden.

Wie aus Fig. 7 weiter ersichtlich ist, umfasst das dargestellte Ausführungsbeispiel eines erfindungsgemäßen Verfahrens 100 zur Winkelbestimmung eines Messwertgebers unter Verwendung einer der oben beschriebenen Winkelsensoranordnungen 1 einen Schritt S100, in welchem mindestens zwei verschiedene Messsignale MS1, MS2, MS3, MSn zur Verfügung gestellt werden, welche jeweils eine aktuelle Winkellage W des Messwertgebers repräsentieren. In einem Schritt S110 werden die mindestens zwei Messsignale MS1, MS2, MS3, MSn aufbereitet, indem die mindestens zwei Messsignale MS1, MS2, MS3, MSn jeweils mit einem variabel einstellbaren Verstärkungsfaktor AVF verstärkt und bei Bedarf digitalisiert werden. In einem Schritt S120 wird in Abhängigkeit des aktuell eingestellten Verstärkungsfaktors AVF mindestes ein Korrekturkoeffizient KK1, KK2, KK3, KK4 adaptiv berechnet. In einem Schritt S130 werden die mindestens zwei aufbereiteten Messsignale AMS1, AMS2, AMS3, AMSn entsprechend korrigiert. In einem Schritt S140 wird mittels mindestens einer mathematischen Transformation der mindestens zwei korrigierten Messsignale KMS1, KMS2, KMS3, KMSn die aktuelle Winkellage W des Messwertgebers berechnet. In einem Schritt S150 wird die berechnete Winkellage W des Messwertgebers ausgegeben.

Wie oben bereits ausgeführt wurden wird mit dem mindestens einen Korrekturkoeffizienten KK1, KK2, KK3, KK4 eine Offsetkorrektur und/oder eine Verstärkungsfaktorkorrektur und/oder eine Phasenkorrektur und/oder eine harmonische Korrektur der mindestens zwei aufbereiteten Messsignale AMS1, AMS2, AMS3, AMSn durchgeführt. Die Korrekturkoeffizienten KK1, KK2, KK3, KK4 für eine Offsetkorrektur und/oder für eine Verstärkungsfaktorkorrektur und/oder für eine Phasenkorrektur und/oder für eine harmonische Korrektur der aufbereiteten Messsignale AMS1, AMS2, AMS3, AMSn werden jeweils über einen linearen mathematischen Zusammenhang oder über eine vorab erstellte und gespeicherte Umsetztabelle an den aktuell eingestellten Verstärkungsfaktor AVF angepasst.

Bei einer "n"-kanaligen Messwerterfassung werden im Schritt S100 "n" Messsignale MS1, MS2, MS3, MSn zur Verfügung gestellt, im Schritt S110 aufbereitet und im Schritt S130 korrigiert. Hierbei werden die "n" korrigierten Messsignale KMS1, KMS2, KMS3, KMSn im Schritt S140 durch mindestens eine mathematische Transformation in ein korrigiertes Sinussignal KSIN und in ein korrigiertes Cosinussignal KCOS transformiert. Anschließend wird im Schritt S140 mittels einer Arcustangensfunktion aus dem korrigierten Sinussignal KSIN und dem korrigierten Cosinussignal TCOS die aktuelle Winkellage W des Messwertgebers berechnet.

Bei einer zweikanaligen Messwerterfassung werden im Schritt S100 ein Sinuswert SIN als erstes Messsignal MS1 und ein Cosinuswert COS als zweites Messsignal MW2 einer aktuellen Winkellage W des Messwertgebers zur Verfügung gestellt, im Schritt S110 aufbereitet und im Schritt S130 korrigiert. Im Schritt S140 wird mittels einer Arcustangensfunktion aus dem korrigierten Sinuswert KSIN und dem korrigierten Cosinuswert KCOS die aktuelle Winkellage W des Messwertgebers berechnet.

Dieses Verfahren 100 kann beispielsweise in Software oder Hardware oder in einer Mischform aus Software und Hardware beispielsweise in der Korrekturvorrichtung 10 implementiert sein.

## Patentansprüche

1. Winkelsensoranordnung (1) mit einem Messwertgeber, einer Messwerterfassungsvorrichtung (2), einer Signalaufbereitungsvorrichtung (3), einer Korrekturvorrichtung (10) und einer Winkelberechnungsvorrichtung (20), wobei die Messwerterfassungsvorrichtung (2) ausgeführt ist, mindestens eine eine aktuelle Winkellage (W) des Messwertgebers repräsentierende physikalische Größe zu erfassen und mindestens zwei Messsignale (MS1, MS2, MS3, MSn) auszugeben, welche jeweils eine aktuelle Winkellage (W) des Messwertgebers repräsentieren, wobei die Signalaufbereitungsvorrichtung (3) ausgeführt ist, die mindestens zwei Messsignale (MS1, MS2, MS3, MSn) aufzubereiten und jeweils mit einem variabel einstellbaren Verstärkungsfaktor zu verstärken und bei Bedarf zu digitalisieren und die aufbereiteten Messsignale (AMS1, AMS2, AMS3, AMSn) sowie den aktuell eingestellten Verstärkungsfaktor (AVF) der Korrekturvorrichtung (10) zur Verfügung zu stellen, wobei die Korrekturvorrichtung (10) ausgeführt ist, in Abhängigkeit des in der Signalaufbereitungsvorrichtung (3) aktuell eingestellten Verstärkungsfaktors (AVF) mindestens einen Korrekturkoeffizienten (KK1, KK2, KK3, KK4) adaptiv zu berechnen und die mindestens zwei aufbereiteten Messsignale (AMS1, AMS2, AMS3, AMSn) entsprechend zu korrigieren und die mindestens zwei korrigierten Messsignale (KMS1, KMS2, KMS3, KMSn) auszugeben, wobei die Winkelberechnungsvorrichtung (20) ausgeführt ist, mittels mindestens einer mathematischen Transformation der mindestens zwei korrigierten Messsignale (KMS1, KMS2, KMS3, KMSn) die aktuelle Winkellage (W) des Messwertgebers zu berechnen.

2. Winkelsensoranordnung (1) nach Anspruch 1, **dadurch gekennzeichnet, dass** die Korrekturvorrichtung (10) weiter ausgeführt ist, mit dem mindestens einen Korrekturkoeffizienten (KK1, KK2, KK3, KK4) eine Offsetkorrektur und/oder eine Verstärkungsfaktorkorrektur und/oder eine Phasenkorrektur und/oder eine harmonische Korrektur der aufbereiteten Messsignale (AMS1, AMS2, AMS3, AMSn) durchzuführen.

3. Winkelsensoranordnung (1) nach Anspruch 1 oder 2, **dadurch gekennzeichnet, dass** eine "n"-kanalige Messwerterfassungsvorrichtung (2) ausgeführt ist, "n" Messsignale (MS1, MS2, MS3, MSn) einer aktuellen Winkellage (W) des Messwertgebers zur Verfügung zu stellen, wobei die Signalaufbereitungsvorrichtung (3) ausgeführt ist, die "n" Messsignale (MS1, MS2, MS3, MSn) aufzubereiten, wobei die Korrekturvorrichtung (10) ausgeführt ist, die "n" aufbereiteten Messsignale (AMS1, AMS2, AMS3, AMSn) zu korrigieren und "n" korrigierte Messsignale (KMS1, KMS2, KMS3, KMSn) an eine Transformationsvorrichtung (22) auszugeben, wobei die Transformationsvorrichtung (22) ausgeführt ist, die "n" korrigierten Messsignale (KMS1, KMS2, KMS3, KMSn) mittels mindestens einer mathematischen Transformation in ein korrigiertes Sinussignal (KSIN) und in ein korrigiertes Cosinussignal (KCOS) zu transformieren und auszugeben, wobei die Winkelberechnungsvorrichtung (20) ausgeführt ist, aus dem korrigierten Sinussignal (KSIN) und dem korrigierten Cosinussignal (KCOS) mittels einer Arcustangensfunktion die aktuelle Winkellage (W) des Messwertgebers zu berechnen.

4. Winkelsensoranordnung (1) nach Anspruch 1 oder 2, **dadurch gekennzeichnet, dass** eine "n"-kanalige Messwerterfassungsvorrichtung (2) ausgeführt ist, "n" Messsignale (MS1, MS2, MS3, MSn) einer aktuellen Winkellage (W) des Messwertgebers zur Verfügung zu stellen, wobei die Signalaufbereitungsvorrichtung (3) ausgeführt ist, die "n" Messsignale (MS1, MS2, MS3, MSn) aufzubereiten und "n" aufbereitete Messsignale (AMS1, AMS2, AMS3, AMSn) an eine Transformationsvorrichtung (22) auszugeben, wobei die Transformationsvorrichtung (22) ausgeführt ist, die "n" aufbereiteten Messsignale (AMS1, AMS2, AMS3, AMSn) mittels mindestens einer mathematischen Transformation in ein aufbereitetes Sinussignal (ASIN) und in ein aufbereitetes Cosinussignal (ACOS) zu transformieren und an die Korrekturvorrichtung (10) auszugeben, wobei die Korrekturvorrichtung (10) ausgeführt ist, das aufbereitete Sinussignal (ASIN) und das aufbereitete Cosinussignal (ACOS) zu korrigieren ein korrigiertes Sinussignal (KSIN) und ein korrigiertes Cosinussignal (KCOS) an die Winkelberechnungsvorrichtung (20) auszugeben, welche ausgeführt ist, mittels einer Arcustangensfunktion aus dem korrigierten Sinuswert (KSIN) und dem korrigierten Cosinuswert (KCOS) die aktuelle Winkellage (W) des Messwertgebers zu berechnen.

5. Winkelsensoranordnung (1) nach Anspruch 1 oder 2, **dadurch gekennzeichnet, dass** eine zweikanalige Messwerterfassungsvorrichtung (2) ausgeführt ist, ein Sinussignal (SIN) als erstes Messsignal (MS1) und ein Cosinussignal (COS) als zweites Messsignal (MS2) einer aktuellen Winkellage (W) des Messwertgebers zur Verfügung zu stellen, wobei die Signalaufbereitungsvorrichtung (3) ausgeführt ist, das Sinussignal (SIN) und das Cosinussignal (COS) aufzubereiten und ein aufbereitetes Sinussignal (ASIN) als erstes aufbereitetes Messsignal (AMS1) und ein aufbereitetes Cosinussignal (ACOS) als zweites aufbereitetes Messsignal (AMS2) einer aktuellen Winkellage (W) des Messwertgebers an die Korrekturvorrichtung (10) auszugeben, wobei die Korrekturvorrichtung (10) ausgeführt ist, ein korrigiertes Sinussignal (KSIN) als erstes korrigiertes Messsignal (KMS1) und ein korrigiertes Cosinussignal (KCOS) als zweites korrigiertes Messsignal (KMS2) an die Winkelberechnungsvorrichtung (20) auszugeben, welche ausgeführt ist, mittels einer Arcustangensfunktion aus dem korrigierten Sinuswert (KSIN) und dem korrigierten Cosinuswert (KCOS) die aktuelle Winkellage (W) des Messwertgebers zu berechnen.

6. Winkelsensoranordnung (1) nach einem der Ansprüche 3 bis 5, **dadurch gekennzeichnet, dass** die Signalaufbereitungsvorrichtung (3) einkanalig ausgestaltet ist und ausgeführt ist, die "n" Messsignale (MS1, MS2, MS3, MSn) einer aktuellen Winkellage (W) des Messwertgebers nacheinander zu empfangen, aufzubereiten und auszugeben.

7. Winkelsensoranordnung (1) nach einem der Ansprüche 3 bis 6, **dadurch gekennzeichnet, dass** die Korrekturvorrichtung (10) einkanalig ausgestaltet ist und ausgeführt ist, die "n" aufbereiteten Messsignale (AMS1, AMS2, AMS3, AMSn) von der einkanaligen Signalaufbereitungsvorrichtung (3B) oder von einer mehrkanaligen Signalaufbereitungsvorrichtung (3A) nacheinander zu empfangen, zu korrigieren und auszugeben.

8. Winkelsensoranordnung (1) nach Anspruch 6 oder 7, **dadurch gekennzeichnet, dass** ein n-kanaliger Multiplexer (30) zwischen der mehrkanaligen Messwerterfassungsvorrichtung (2A) und der einkanaligen Signalaufbereitungsvorrichtung (3B) oder zwischen der n-kanaligen Signalaufbereitungsvorrichtung (3A) und der einkanaligen Korrekturvorrichtung (10B) eingeschleift ist, wobei der n-kanalige Multiplexer (30) ausgeführt ist, die "n" Messsignale (MS1, MS2, MS3, MSn) einer aktuellen Winkellage (W) des Messwertgebers der einkanaligen Signalaufbereitungsvorrichtung (3B) nacheinander zur Verfügung zu stellen, wobei die einkanalige Signalaufbereitungsvorrichtung (3B) ausgeführt ist, die "n" Messsignale (MS1, MS2, MS3, MSn) nacheinander aufzubereiten und auszugeben, oder die "n" aufbereiteten Messsignale (AMS1, AMS2, AMS3, AMS4) der einkanaligen Korrekturvorrichtung (10B) nacheinander zur Verfügung zu stellen, welche ausgeführt ist, die "n" aufbereiteten Messsignale (AMS1, AMS2, AMS3, AMSn) nacheinander zu korrigieren und auszugeben.

9. Winkelsensoranordnung (1) nach Anspruch 8, **dadurch gekennzeichnet, dass** ein n-kanaliger Demultiplexer (40) zwischen der einkanaligen Signalaufbereitungsvorrichtung (3B) und der mehrkanaligen Korrekturvorrichtung (10A) oder zwischen der einkanaligen Korrekturvorrichtung (10B) und der Winkelberechnungsvorrichtung (20) eingeschleift ist, wobei der n-kanalige Demultiplexer (40) ausgeführt ist, die "n" aufbereiteten Messsignale (AMS1, AMS2, AMS3, AMSn) nacheinander zu empfangen und zu speichern und gleichzeitig an die mehrkanalige Korrekturvorrichtung (10A) auszugeben oder die "n" korrigierten Messsignale (KMS1, KMS2, KMS3, KMSn) nacheinander zu empfangen und zu speichern und gleichzeitig an die Winkelberechnungsvorrichtung (20) auszugeben.

10. Winkelsensoranordnung (1) nach einem der Ansprüche 1 bis 9, **dadurch gekennzeichnet, dass** die Korrekturvorrichtung (10) weiter ausgeführt ist, den mindestens einen Korrekturkoeffizienten (KK1, KK2, KK3, KK4) über einen linearen mathematischen Zusammenhang oder über eine vorab erstellte und gespeicherte Umsetztabelle an den aktuell eingestellten Verstärkungsfaktor (AVF) anzupassen.

11. Winkelsensoranordnung (1) nach einem der Ansprüche 1 bis 10,
    **dadurch gekennzeichnet, dass** die Korrekturvorrichtung (10) für jeden Messkanal mindestens einen Berechnungsblock (12) und mindestens einen Korrekturblock (14, 16) umfasst, wobei der mindestens eine Berechnungsblock (12) ausgeführt ist, den mindestens einen Korrekturkoeffizienten (KK1, KK2, KK3, KK4) für die aufbereiteten mindestens zwei Messsignale (MS1, MS2, MS3, MSn) in Abhängigkeit des aktuell eingestellten Verstärkungsfaktor (AVF) adaptiv zu berechnen und dem korrespondierenden Korrekturblock (14, 16) zur Verfügung zu stellen, welcher ausgeführt ist, die aufbereiteten Messsignale (AMS1, AMS2, AMS3, AMSn) entsprechend zu korrigieren und die korrigierten Messsignale (KMS1, KMS2, KMS3, KMSn) auszugeben.

12. Winkelsensoranordnung (1) nach einem der Ansprüche 1 bis 11,
    **dadurch gekennzeichnet, dass** die Signalaufbereitungsvorrichtung (3) und/oder die Korrekturvorrichtung (10) und/oder die Winkelberechnungsvorrichtung (20) jeweils als anwendungsspezifischer integrierter Schaltkreis (ASIC) oder als programmierbare Logikgatteranordnung (FPGA) oder als Mikrocontroller ausgeführt sind.

13. Anordnung (50) zur Bestimmung einer Winkeldifferenz (WD), mit zwei Winkelsensoranordnungen (52, 54), welche jeweils nach einem der Ansprüche 1 bis 12 ausgeführt sind, und einer Berechnungseinheit (60), wobei eine erste Winkelsensoranordnung (52) eine erste aktuelle Winkellage (W1) eines ersten Messwertgebers zur Verfügung stellt, und eine zweite Winkelsensoranordnung (54) eine zweite aktuelle Winkellage (W2) eines zweiten Messwertgebers zur Verfügung stellt, und wobei die Berechnungseinheit (60) ausgeführt ist, aus der ersten aktuellen Winkellage (W1) und aus der zweiten aktuellen Winkellage (W2) einen Differenzwinkel (W12) zu berechnen und auszugeben.

14. Verfahren (100) zur Winkelbestimmung eines Messwertgebers unter Verwendung der Winkelsensoranordnung (1) nach einem der Ansprüche 1 bis 12, wobei mindestens zwei verschiedene Messsignale (MS1, MS2, MS3, MSn) zur Verfügung gestellt werden, welche jeweils eine aktuelle Winkellage (W) des Messwertgebers repräsentieren, wobei die mindestens zwei Messsignale (MS1, MS2, MS3, MSn) aufbereitet werden, indem die mindestens zwei Messsignale (MS1, MS2, MS3, MSn) jeweils mit einem variabel einstellbaren Verstärkungsfaktor (AVF) verstärkt und bei Bedarf digitalisiert werden, wobei in Abhängigkeit des aktuell eingestellten Verstärkungsfaktors (AVF) mindestes ein Korrekturkoeffizient (KK1, KK2, KK3, KK4) adaptiv berechnet wird und die mindestens zwei aufbereiteten Messsignale (AMS1, AMS2, AMS3, AMSn) entsprechend korrigiert werden, wobei mittels mindestens einer mathematischen Transformation der mindestens zwei korrigierten Messsignale (KMS1, KMS2, KMS3, KMSn) die aktuelle Winkellage (W) des Messwertgebers berechnet und ausgegeben wird.

15. Verfahren (100) nach Anspruch 14, **dadurch gekennzeichnet, dass** mit dem mindestens einen Korrekturkoeffizienten (KK1, KK2, KK3, KK4) eine Offsetkorrektur und/oder eine Verstärkungsfaktorkorrektur und/oder eine Phasenkorrektur und/oder eine harmonische Korrektur der mindestens zwei aufbereiteten Messsignale (AMS1, AMS2, AMS3, AMSn) durchgeführt wird.

16. Verfahren (100) nach Anspruch 14 oder 15, **dadurch gekennzeichnet, dass** bei einer "n"-kanaligen Messwerterfassung "n" Messsignale (MS1, MS2, MS3, MSn) zur Verfügung gestellt, aufbereitet und korrigiert werden, wobei die "n" korrigierten Messsignale (KMS1, KMS2, KMS3, KMSn) durch mindestens eine mathematische Transformation in ein korrigiertes Sinussignal (KSIN) und in ein korrigiertes Cosinussignal (KCOS) transformiert werden, wobei mittels einer Arcustangensfunktion aus dem korrigierten Sinussignal (KSIN) und dem korrigierten Cosinussignal (TCOS) die aktuelle Winkellage (W) des Messwertgebers berechnet wird.

17. Verfahren (100) nach Anspruch 14 oder 15, **dadurch gekennzeichnet, dass** bei einer zweikanaligen Messwerterfassung ein Sinuswert (SIN) als erstes Messsignal (MS1) und ein Cosinuswert (COS) als zweites Messsignal (MS2) einer aktuellen Winkellage (W) des Messwertgebers zur Verfügung gestellt, aufbereitet und korrigiert werden, wobei mittels einer Arcustangensfunktion aus dem korrigierten Sinuswert (KSIN) und dem korrigierten Cosinuswert (KCOS) die aktuelle Winkellage (W) des Messwertgebers berechnet wird.

18. Verfahren (100) nach einem der Ansprüche 14 bis 17, **dadurch gekennzeichnet, dass** die Korrekturkoeffizienten (KK1, KK2, KK3, KK4) für eine Offsetkorrektur und/oder für eine Verstärkungsfaktorkorrektur und/oder für eine Phasenkorrektur und/oder für eine harmonische Korrektur der aufbereiteten Messsignale (MS1, MS2, MS3, MSn) jeweils über einen linearen mathematischen Zusammenhang oder über eine vorab erstellte und gespeicherte Umsetztabelle an den aktuell eingestellten Verstärkungsfaktor (AVF) angepasst werden.

19. Computerprogramm, welches eingerichtet ist, das Verfahren nach einem der Ansprüche 14 bis 18 unter Verwendung der Winkelsensoranordnung nach den Ansprüchen 1 bis 12 auszuführen.

## Claims

1. Angle sensor arrangement (1) comprising a measured value transmitter, a measured value acquisition device (2), a signal conditioning device (3), a correction device (10) and an angle calculation device (20), the measured value acquisition device (2) being designed to acquire at least one physical quantity representing a present angular position (W) of the measured value transmitter and to output at least two measurement signals (MS1, MS2, MS3, MSn), each of which represents a present angular position (W) of the measured value transmitter, the signal conditioning device (3) being designed to condition the at least two measurement signals (MS1, MS2, MS3, MSn) and to amplify each of same using a variably adjustable gain factor and, if necessary, to digitize them, and to provide the conditioned measurement signals (AMS1, AMS2, AMS3, AMSn) and the currently set gain factor (AVF) to the correction device (10), the correction device (10) being designed to take the gain factor (AVF) currently set in the signal conditioning device (3) as a basis for adaptively calculating at least one correction coefficient (KK1, KK2, KK3, KK4) and to correct the at least two conditioned measurement signals (AMS1, AMS2, AMS3, AMSn) accordingly and to output the at least two corrected measurement signals (KMS1, KMS2, KMS3, KMSn), the angle calculation device (20) being designed to use at least one mathematical transformation of the at least two corrected measurement signals (KMS1, KMS2, KMS3, KMSn) to calculate the present angular position (W) of the measured value transmitter.

2. Angle sensor arrangement (1) according to Claim 1, **characterized in that** the correction device (10) is also designed to use the at least one correction coefficient (KK1, KK2, KK3, KK4) to make an offset correction and/or a gain factor correction and/or a phase correction and/or a harmonic correction to the conditioned measurement signals (AMS1, AMS2, AMS3, AMSn).

3. Angle sensor arrangement (1) according to Claim 1 or 2, **characterized in that** an "n"-channel measured value acquisition device (2) is designed to provide "n" measurement signals (MS1, MS2, MS3, MSn) relating to a present angular position (W) of the measured value transmitter, the signal conditioning device (3) being designed to condition the "n" measurement signals (MS1, MS2, MS3, MSn), the correction device (10) being designed to correct the "n" conditioned measurement signals (AMS1, AMS2, AMS3, AMSn) and to output "n" corrected measurement signals (KMS1, KMS2, KMS3, KMSn) to a transformation device (22), the transformation device (22) being designed to transform the "n" corrected measurement signals (KMS1, KMS2, KMS3, KMSn) into a corrected sine signal (KSIN) and a corrected cosine signal (KCOS) by means of at least one mathematical transformation and to output said signals, the angle calculation device (20) being designed to calculate the present angular position (W) of the measured value transmitter from the corrected sine signal (KSIN) and the corrected cosine signal (KCOS) by means of an arc tangent function.

4. Angle sensor arrangement (1) according to Claim 1 or 2, **characterized in that** an "n"-channel measured value acquisition device (2) is designed to provide "n" measurement signals (MS1, MS2, MS3, MSn) relating to a present angular position (W) of the measured value transmitter, the signal conditioning device (3) being designed to condition the "n" measurement signals (MS1, MS2, MS3, MSn) and to output "n" conditioned measurement signals (AMS1, AMS2, AMS3, AMSn) to a transformation device (22), the transformation device (22) being designed to transform the "n" conditioned measurement signals (AMS1, AMS2, AMS3, AMSn) into a conditioned sine signal (ASIN) and a conditioned cosine signal (ACOS) by means of at least one mathematical transformation and to output said signals to the correction device (10), the correction device (10) being designed to correct the conditioned sine signal (ASIN) and the conditioned cosine signal (ACOS) and to output a corrected sine signal (KSIN) and a corrected cosine signal (KCOS) to the angle calculation device (20), which is designed to use an arc tangent function to calculate the present angular position (W) of the measured value transmitter from the corrected sine value (KSIN) and the corrected cosine value (KCOS).

5. Angle sensor arrangement (1) according to Claim 1 or 2, **characterized in that** a two-channel measured value acquisition device (2) is designed to provide a sine signal (SIN) as a first measurement signal (MS1) and a cosine signal (COS) as a second measurement signal (MS2) relating to a present angular position (W) of the measured value transmitter, the signal conditioning device (3) being designed to condition the sine signal (SIN) and the cosine signal (COS) and to output a conditioned sine signal (ASIN) as a first conditioned measurement signal (AMS1) and a conditioned cosine signal (ACOS) as a second conditioned measurement signal (AMS2) relating to a present angular position (W) of the measured value transmitter to the correction device (10), the correction device (10) being designed to output a corrected sine signal (KSIN) as a first corrected measurement signal (KMS1) and a corrected cosine signal (KCOS) as a second corrected measurement signal (KMS2) to the angle calculation device (20), which is designed to use an arc tangent function to calculate the present angular position (W) of the measured value transmitter from the corrected sine value (KSIN) and the corrected cosine value (KCOS).

6. Angle sensor arrangement (1) according to one of Claims 3 to 5, **characterized in that** the signal conditioning device (3) is in single-channel form and designed to receive, condition and output the "n" measurement signals (MS1, MS2, MS3, MSn) relating to a present angular position (W) of the measured value transmitter in succession.

7. Angle sensor arrangement (1) according to one of Claims 3 to 6, **characterized in that** the correction device (10) is in single-channel form and designed to receive, correct and output the "n" conditioned measurement signals (AMS1, AMS2, AMS3, AMSn) from the single-channel signal conditioning device (3B) or from a multi-channel signal conditioning device (3A) in succession.

8. Angle sensor arrangement (1) according to Claim 6 or 7, **characterized in that** an n-channel multiplexer (30) is looped in between the multi-channel measured value acquisition device (2A) and the single-channel signal conditioning device (3B) or between the n-channel signal conditioning device (3A) and the single-channel correction device (10B), the n-channel multiplexer (30) being designed to provide the "n" measurement signals (MS1, MS2, MS3, MSn) relating to a present angular position (W) of the measured value transmitter to the single-channel signal conditioning device (3B) in succession, the single-channel signal conditioning device (3B) being designed to condition and output the "n" measurement signals (MS1, MS2, MS3, MSn) in succession, or to provide the "n" conditioned measurement signals (AMS1, AMS2, AMS3, AMS4) to the single-channel correction device (10B) in succession, which is designed to correct and output the "n" conditioned measurement signals (AMS1, AMS2, AMS3, AMSn) in succession.

9. Angle sensor arrangement (1) according to Claim 8, **characterized in that** an n-channel demultiplexer (40) is looped in between the single-channel signal conditioning device (3B) and the multi-channel correction device (10A) or between the single-channel correction device (10B) and the angle calculation device (20), the n-channel demultiplexer (40) being designed to receive and store the "n" conditioned measurement signals (AMS1, AMS2, AMS3, AMSn) in succession and to simultaneously output same to the multi-channel correction device (10A) or to receive and store the "n" corrected measurement signals (KMS1, KMS2, KMS3, KMSn) in succession and to simultaneously output same to the angle calculation device (20).

10. Angle sensor arrangement (1) according to one of Claims 1 to 9, **characterized in that** the correction device (10) is also designed to match the at least one correction coefficient (KK1, KK2, KK3, KK4) to the currently set gain factor (AVF) using a linear mathematical relationship or using a previously created and stored conversion table.

11. Angle sensor arrangement (1) according to one of Claims 1 to 10, **characterized in that** the correction device (10) comprises at least one calculation block (12) and at least one correction block (14, 16) for each measurement channel, the at least one calculation block (12) being designed to adaptively calculate the at least one correction coefficient (KK1, KK2, KK3, KK4) for the conditioned at least two measurement signals (MS1, MS2, MS3, MSn) on the basis of the currently set gain factor (AVF) and to provide said at least one correction coefficient to the corresponding correction block (14, 16), which is designed to correct the conditioned measurement signals (AMS1, AMS2, AMS3, AMSn) accordingly and to output the corrected measurement signals (KMS1, KMS2, KMS3, KMSn).

12. Angle sensor arrangement (1) according to one of Claims 1 to 11, **characterized in that** the signal conditioning device (3) and/or the correction device (10) and/or the angle calculation device (20) are each an application-specific integrated circuit (ASIC) or a programmable logic gate array (FPGA) or a microcontroller.

13. Arrangement (50) for determining an angle difference (WD), comprising two angle sensor arrangements (52, 54), each of which is designed according to one of Claims 1 to 12, and a calculation unit (60), a first angle sensor arrangement (52) providing a first present angular position (W1) of a first measured value transmitter, and a second angle sensor arrangement (54) providing a second present angular position (W2) of a second measured value transmitter, and the calculation unit (60) being designed to calculate and output a differential angle (W12) from the first present angular position (W1) and from the second present angular position (W2).

14. Method (100) for determining the angle of a measured value transmitter using the angle sensor arrangement (1) according to one of Claims 1 to 12, wherein at least two different measurement signals (MS1, MS2, MS3, MSn) are provided, each of which represents a present angular position (W) of the measured value transmitter, wherein the at least two measurement signals (MS1, MS2, MS3, MSn) are conditioned by amplifying each of the at least two measurement signals (MS1, MS2, MS3, MSn) using a variably adjustable gain factor (AVF) and, if necessary, digitizing them, wherein the currently set gain factor (AVF) is taken as a basis for adaptively calculating at least one correction coefficient (KK1, KK2, KK3, KK4) and the at least two conditioned measurement signals (AMS1, AMS2, AMS3, AMSn) are corrected accordingly, wherein at least one mathematical transformation of the at least two corrected measurement signals (KMS1, KMS2, KMS3, KMSn) is used to calculate and output the present angular position (W) of the measured value transmitter.

15. Method (100) according to Claim 14, **characterized in that** the at least one correction coefficient (KK1, KK2, KK3, KK4) is used to make an offset correction and/or a gain factor correction and/or a phase correction and/or a harmonic correction to the at least two conditioned measurement signals (AMS1, AMS2, AMS3, AMSn).

16. Method (100) according to Claim 14 or 15, **characterized in that** an "n"-channel measured value acquisition results in "n" measurement signals (MS1, MS2, MS3, MSn) being provided, conditioned and corrected, wherein the "n" corrected measurement signals (KMS1, KMS2, KMS3, KMSn) are transformed into a corrected sine signal (KSIN) and a corrected cosine signal (KCOS) by at least one mathematical transformation, an arc tangent function being used to calculate the present angular position (W) of the measured value transmitter from the corrected sine signal (KSIN) and the corrected cosine signal (TCOS).

17. Method (100) according to Claim 14 or 15, **characterized in that** a two-channel measured value acquisition results in a sine value (SIN) as a first measurement signal (MS1) and a cosine value (COS) as a second measurement signal (MS2) relating to a present angular position (W) of the measured value transmitter being provided, conditioned and corrected, wherein an arc tangent function is used to calculate the present angular position (W) of the measured value transmitter from the corrected sine value (KSIN) and the corrected cosine value (KCOS).

18. Method (100) according to one of Claims 14 to 17, **characterized in that** each of the correction coefficients (KK1, KK2, KK3, KK4) for an offset correction and/or for a gain factor correction and/or for a phase correction and/or for a harmonic correction to the conditioned measurement signals (MS1, MS2, MS3, MSn) is matched to the currently set gain factor (AVF) using a linear mathematical relationship or using a previously created and stored conversion table.

19. Computer program configured to carry out the method according to one of Claims 14 to 18 using the angle sensor arrangement according to Claims 1 to 12.

## Revendications

1. Système de capteur d'angle (1) comprenant un transducteur de mesure, un dispositif d'acquisition de valeurs de mesure (2), un dispositif de traitement de signal (3), un dispositif de correction (10) et un dispositif de calcul d'angle (20), le dispositif d'acquisition de valeurs de mesure (2) étant conçu pour acquérir au moins une grandeur physique représentant une position angulaire actuelle (W) du transducteur de mesure et pour délivrer en sortie au moins deux signaux de mesure (MS1, MS2, MS3, MSn) qui représentent respectivement une position angulaire actuelle (W) du transducteur de mesure, le dispositif de traitement de signal (3) étant conçu pour traiter les au moins deux signaux de mesure (MS1, MS2, MS3, MSn) et pour les amplifier respectivement avec un facteur d'amplification réglable de manière variable et, si nécessaire, pour les numériser et pour fournir les signaux de mesure traités (AMS1, AMS2, AMS3, AMSn) ainsi que le facteur d'amplification (AVF) actuellement réglé au dispositif de correction (10), le dispositif de correction (10) étant conçu pour calculer de manière adaptative au moins un coefficient de correction (KK1, KK2, KK3, KK4) en fonction du facteur d'amplification (AVF) actuellement réglé dans le dispositif de traitement de signal (3) et pour corriger les au moins deux signaux de mesure traités (AMS1, AMS2, AMS3, AMSn) en conséquence et pour délivrer en sortie les au moins deux signaux de mesure corrigés (KMS1, KMS2, KMS3, KMSn), le dispositif de calcul d'angle (20) étant conçu pour calculer la position angulaire actuelle (W) du transducteur de mesure au moyen d'au moins une transformation mathématique des au moins deux signaux de mesure corrigés (KMS1, KMS2, KMS3, KMSn).

2. Système de capteur d'angle (1) selon la revendication 1, **caractérisé en ce que** le dispositif de correction (10) est en outre conçu pour effectuer, à l'aide de l'au moins un coefficient de correction (KK1, KK2, KK3, KK4), une correction de décalage et/ou une correction de facteur d'amplification et/ou une correction de phase et/ou une correction harmonique des signaux de mesure traités (AMS1, AMS2, AMS3, AMSn).

3. Système de capteur d'angle (1) selon la revendication 1 ou 2, **caractérisé en ce qu'**un dispositif d'acquisition de valeurs de mesure à « n » canaux (2) est conçu pour fournir « n » signaux de mesure (MS1, MS2, MS3, MSn) d'une position angulaire actuelle (W) du transducteur de mesure, le dispositif de traitement de signal (3) étant conçu pour traiter les « n » signaux de mesure (MS1, MS2, MS3, MSn), le dispositif de correction (10) étant conçu pour corriger les « n » signaux de mesure traités (AMS1, AMS2, AMS3, AMSn) et pour délivrer en sortie « n » signaux de mesure corrigés (KMS1, KMS2, KMS3, KMSn) à un dispositif de transformation (22), le dispositif de transformation (22) étant conçu pour transformer les « n » signaux de mesure corrigés (KMS1, KMS2, KMS3, KMSn) au moyen d'au moins une transformation mathématique en un signal sinus corrigé (KSIN) et en un signal cosinus corrigé (KCOS) et pour les délivrer en sortie, le dispositif de calcul d'angle (20) étant conçu pour calculer la position angulaire actuelle (W) du transducteur de mesure à partir du signal sinus corrigé (KSIN) et du signal cosinus corrigé (KCOS) au moyen d'une fonction arctangente.

4. Système de capteur d'angle (1) selon la revendication 1 ou 2, **caractérisé en ce qu'**un dispositif d'acquisition de valeurs de mesure à « n » canaux (2) est conçu pour fournir « n » signaux de mesure (MS1, MS2, MS3, MSn) d'une position angulaire actuelle (W) du transducteur de mesure, le dispositif de traitement de signal (3) étant conçu pour traiter les « n » signaux de mesure (MS1, MS2, MS3, MSn) et pour délivrer en sortie « n » signaux de mesure traités (AMS1, AMS2, AMS3, AMSn) à un dispositif de transformation (22), le dispositif de transformation (22) étant conçu pour transformer les « n » signaux de mesure traités (AMS1, AMS2, AMS3, AMSn) au moyen d'au moins une transformation mathématique en un signal sinus traité (ASIN) et en un signal cosinus traité (ACOS) et pour les délivrer en sortie au dispositif de correction (10), le dispositif de correction (10) étant conçu pour corriger le signal sinus traité (ASIN) et le signal cosinus traité (ACOS) et pour délivrer en sortie un signal sinus corrigé (KSIN) et un signal cosinus corrigé (KCOS) au dispositif de calcul d'angle (20), lequel est conçu pour calculer la position angulaire actuelle (W) du transducteur de mesure au moyen d'une fonction arctangente à partir de la valeur sinus corrigée (KSIN) et de la valeur cosinus corrigée (KCOS).

5. Système de capteur d'angle (1) selon la revendication 1 ou 2, **caractérisé en ce qu'**un dispositif d'acquisition de valeurs de mesure à deux canaux (2) est conçu pour fournir un signal sinus (SIN) en tant que premier signal de mesure (MS1) et un signal cosinus (COS) en tant que deuxième signal de mesure (MS2) d'une position angulaire actuelle (W) du transducteur de mesure, le dispositif de traitement de signal (3) étant conçu pour traiter le signal sinus (SIN) et le signal cosinus (COS) et pour délivrer en sortie un signal sinus traité (ASIN) en tant que premier signal de mesure traité (AMS1) et un signal cosinus traité (ACOS) en tant que deuxième signal de mesure traité (AMS2) d'une position angulaire actuelle (W) du transducteur de mesure au dispositif de correction (10), le dispositif de correction (10) étant conçu pour délivrer en sortie un signal sinus corrigé (KSIN) en tant que premier signal de mesure corrigé (KMS1) et un signal cosinus corrigé (KCOS) en tant que deuxième signal de mesure corrigé (KMS2) au dispositif de calcul d'angle (20), lequel est conçu pour calculer la position angulaire actuelle du transducteur de mesure (W) au moyen d'une fonction arctangente à partir de la valeur sinus corrigée (KSIN) et de la valeur cosinus corrigée (KCOS).

6. Système de capteur d'angle (1) selon l'une quelconque des revendications 3 à 5, **caractérisé en ce que** le dispositif de traitement de signal (3) est configuré sous la forme d'un dispositif à canal unique et est conçu pour recevoir, traiter et délivrer en sortie successivement les « n » signaux de mesure (MS1, MS2, MS3, MSn) d'une position angulaire actuelle (W) du transducteur de mesure.

7. Système de capteur d'angle (1) selon l'une quelconque des revendications 3 à 6, **caractérisé en ce que** le dispositif de correction (10) est configuré sous la forme d'un dispositif à canal unique et est conçu pour recevoir successivement, corriger et délivrer en sortie les signaux de mesure traités « n » (AMS1, AMS2, AMS3, AMSn) provenant du dispositif de traitement de signal à canal unique (3B) ou d'un dispositif de traitement de signal multicanal (3A).

8. Système de capteur d'angle (1) selon la revendication 6 ou 7, **caractérisé en ce qu'**un multiplexeur à n canaux (30) est inséré entre le dispositif d'acquisition de valeurs de mesure multicanal (2A) et le dispositif de traitement de signal à canal unique (3B) ou entre le dispositif de traitement de signal à n canaux (3A) et le dispositif de correction à canal unique (10B), le multiplexeur à n canaux (30) étant conçu pour fournir successivement les « n » signaux de mesure (MS1, MS2, MS3, MSn) d'une position angulaire actuelle (W) du transducteur de mesure au dispositif de traitement de signal à canal unique (3B), le dispositif de traitement de signal à canal unique (3B) étant conçu pour traiter et délivrer en sortie successivement les « n » signaux de mesure (MS1, MS2, MS3, MSn), ou pour fournir successivement les « n » signaux de mesure traités (AMS1, AMS2, AMS3, AMS4) au dispositif de correction à canal unique (10B), lequel est conçu pour corriger et délivrer en sortie successivement les « n » signaux de mesure traités (AMS1, AMS2, AMS3, AMSn).

9. Système de capteur d'angle (1) selon la revendication 8, **caractérisé en ce qu'**un démultiplexeur à n canaux (40) est inséré entre le dispositif de traitement de signal à canal unique (3B) et le dispositif de correction multicanal (10A) ou entre le dispositif de correction à canal unique (10B) et le dispositif de calcul d'angle (20), le démultiplexeur à n canaux (40) étant conçu pour recevoir et mémoriser successivement les « n » signaux de mesure traités (AMS1, AMS2, AMS3, AMSn) et pour les délivrer simultanément au dispositif de correction multicanal (10A), ou pour recevoir et mémoriser successivement les « n » signaux de mesure corrigés (KMS1, KMS2, KMS3, KMSn) et pour les délivrer simultanément au dispositif de calcul d'angle (20).

10. Système de capteur d'angle (1) selon l'une quelconque des revendications 1 à 9, **caractérisé en ce que** le dispositif de correction (10) est en outre conçu pour adapter l'au moins un coefficient de correction (KK1, KK2, KK3, KK4) au facteur d'amplification (AVF) actuellement réglé au moyen d'une relation mathématique linéaire ou d'une table de conversion préétablie et mémorisée.

11. Système de capteur d'angle (1) selon l'une quelconque des revendications 1 à 10, **caractérisé en ce que** le dispositif de correction (10) comprend, pour chaque canal de mesure, au moins un bloc de calcul (12) et au moins un bloc de correction (14, 16), l'au moins un bloc de calcul (12) étant conçu pour calculer de manière adaptative l'au moins un coefficient de correction (KK1, KK2, KK3, KK4) pour les au moins deux signaux de mesure traités (MS1, MS2, MS3, MSn) en fonction du facteur d'amplification (AVF) actuellement réglé et pour le fournir au bloc de correction (14, 16) correspondant, lequel est conçu pour corriger les signaux de mesure traités (AMS1, AMS2, AMS3, AMSn) en conséquence et pour délivrer en sortie les signaux de mesure corrigés (KMS1, KMS2, KMS3, KMSn).

12. Système de capteur d'angle (1) selon l'une quelconque des revendications 1 à 11, **caractérisé en ce que** le dispositif de traitement de signal (3) et/ou le dispositif de correction (10) et/ou le dispositif de calcul d'angle (20) sont respectivement conçus sous la forme d'un circuit intégré spécifique à l'application (ASIC) ou d'un réseau de portes logiques programmables (FPGA) ou d'un microcontrôleur.

13. Système (50) de détermination d'une différence angulaire (WD), comprenant deux systèmes de capteur d'angle (52, 54) qui sont respectivement conçus selon l'une quelconque des revendications 1 à 12, et une unité de calcul (60), un premier système de capteur d'angle (52) fournissant une première position angulaire actuelle (W1) d'un premier transducteur de mesure, et un deuxième système de capteur d'angle (54) fournissant une deuxième position angulaire actuelle (W2) d'un deuxième transducteur de mesure, et l'unité de calcul (60) étant conçue pour calculer à partir de la première position angulaire actuelle (W1) et de la deuxième position angulaire actuelle (W2) un angle différentiel (W12) et pour le délivrer en sortie.

14. Procédé (100) de détermination d'angle d'un transducteur de mesure par utilisation du système de capteur d'angle (1) selon l'une quelconque des revendications 1 à 12, dans lequel au moins deux signaux de mesure différents (MS1, MS2, MS3, MSn) sont fournis, lesquels représentent respectivement une position angulaire actuelle (W) du transducteur de mesure, les au moins deux signaux de mesure (MS1, MS2, MS3, MSn) étant traités en amplifiant les au moins deux signaux de mesure (MS1, MS2, MS3, MSn) respectivement avec un facteur d'amplification (AVF) réglable de manière variable et, si nécessaire, en les numérisant, au moins un coefficient de correction (KK1, KK2, KK3, KK4) étant calculé de manière adaptative en fonction du facteur d'amplification (AVF) actuellement réglé et les au moins deux signaux de mesure traités (AMS1, AMS2, AMS3, AMSn) étant corrigés en conséquence, la position angulaire actuelle (W) du transducteur de mesure étant calculée au moyen d'au moins une transformation mathématique des au moins deux signaux de mesure corrigés (KMS1, KMS2, KMS3, KMSn) et étant délivrée en sortie.

15. Procédé (100) selon la revendication 14, **caracté-**

**risé en ce qu'**une correction de décalage et/ou une correction de facteur d'amplification et/ou une correction de phase et/ou une correction harmonique des au moins deux signaux de mesure traités (AMS1, AMS2, AMS3, AMSn) est effectuée à l'aide de l'au moins un coefficient de correction (KK1, KK2, KK3, KK4).

**16.** Procédé (100) selon la revendication 14 ou 15, **caractérisé en ce que**, dans le cas d'une acquisition de valeurs de mesure à « n » canaux, « n » signaux de mesure (MS1, MS2, MS3, MSn) sont fournis, traités et corrigés, les « n » signaux de mesure corrigés (KMS1, KMS2, KMS3, KMSn) étant transformés au moyen d'au moins une transformation mathématique en un signal sinus corrigé (KSIN) et en un signal cosinus corrigé (KCOS), la position angulaire actuelle (W) du transducteur de mesure étant calculée au moyen d'une fonction arctangente à partir du signal sinus corrigé (KSIN) et du signal cosinus corrigé (KCOS).

**17.** Procédé (100) selon la revendication 14 ou 15, **caractérisé en ce que**, dans le cas d'une acquisition de valeurs de mesure à deux canaux, une valeur sinus (SIN) en tant que premier signal de mesure (MS1) et une valeur cosinus (COS) en tant que deuxième signal de mesure (MS2) d'une position angulaire actuelle (W) du transducteur de mesure sont fournies, traitées et corrigées, la position angulaire actuelle (W) du transducteur de mesure étant calculée au moyen d'une fonction arctangente à partir de la valeur sinus corrigée (KSIN) et de la valeur cosinus corrigée (KCOS).

**18.** Procédé (100) selon l'une quelconque des revendications 14 à 17, **caractérisé en ce que** les coefficients de correction (KK1, KK2, KK3, KK4) pour une correction de décalage et/ou pour une correction de facteur d'amplification et/ou pour une correction de phase et/ou pour une correction harmonique des signaux de mesure traités (MS1, MS2, MS3, MSn) sont respectivement adaptés au facteur d'amplification (AVF) actuellement réglé par le biais d'une relation mathématique linéaire ou d'une table de conversion préétablie et mémorisée.

**19.** Programme d'ordinateur conçu pour mettre en œuvre le procédé selon l'une quelconque des revendications 14 à 18 à l'aide du système de capteur d'angle selon les revendications 1 à 12.

EP 4 460 677 B1

1,1A

20,20A

Fig. 1

**Fig. 2**

EP 4 460 677 B1

**Fig. 3**

Fig. 4

EP 4 460 677 B1

Fig. 5

EP 4 460 677 B1

50

52 —W1→ 60 —W12→

54 —W2→

**Fig. 6**

100

S100

S110

S120

S130

S140

S150

**Fig. 7**

**IN DER BESCHREIBUNG AUFGEFÜHRTE DOKUMENTE**

**In der Beschreibung aufgeführte Patentdokumente**

- EP 1315954 B1
- US 2020408570 A1